# EUROPEAN PATENT APPLICATION

(11) **EP 4 703 271 A1**
(43) Date of publication of application: **04.03.2026**
(21) Application number: 25198283.1
(22) Date of filing: 26.08.2025
(51) Int. Cl.: B64D 33/08, B64D 35/026, H02K 9/06, B64D 27/34, H02K 11/33, B64D 31/16

(54) **PROPULSOR ASSEMBLY FOR AN ELECTRIC AIRCRAFT**

(30) Priority: 29.08.2024 US 202418818800
(71) Applicant: BETA AIR LLC, South Burlington VT 05403 (US)
(72) Inventor: BELZILE, Manon Danielle, South Burlington, VT 05403 (US); DEZON-GAILLARD, Patrice Fabien, South Burlington, VT 05403 (US); WIDDIS, Stephen James, South Burlington, VT 05403 (US); KEMELOR, Dylan Barak, South Burlington, VT 05403 (US)
(74) Representative: Chettle, John Edward

(57) **Abstract**

An electric vertical takeoff and landing aircraft including a motor and inverter assembly is provided. The motor and inverter assembly includes an inverter assembly including a plurality of inverters mounted on an inverter frame and coupled to an electric motor, forming an integrated motor and inverter assembly. Mounting of the inverter assembly to the motor in this manner provides for a more rigid, and more compact arrangement of the motor and the plurality of inverters, and minimizes a distance between the inverters and a connection to a stator of the electric motor.

## Description

### FIELD

This relates to a propulsor assembly, and in particular, to a propulsor assembly for an aircraft including an electric aircraft.

### BACKGROUND

Aircraft may employ one or more propulsor assemblies to propel the aircraft through a medium. In an aircraft configured for vertical takeoff and landing operation, the one or more propulsor assemblies provide for operation of the aircraft in a vertical flight mode of operation of the aircraft, i.e., a vertical takeoff and/or vertical landing and/or hover mode of operation, as well as for operation of the aircraft in a forward flight mode of operation. In some examples, the propulsor assemblies of the aircraft may include one or more first propulsor assemblies that provide vertical propulsive force for operation in the vertical flight mode, and one or more second propulsor assemblies that provide forward propulsive force for operation in the forward flight mode.

### SUMMARY

A propulsor assembly, in accordance with implementations described herein, includes a propulsor driven by an electric motor, the electric motor including a rotor and a stator. In some examples, the electric motor receives power from a power source via one or more inverters coupled to the electric motor. In some examples, the power source is a power storage device such as a battery, or a plurality of batteries. In some examples, the one or more inverters convert power, such as, for example, DC power from the power source, to AC power, to power the electric motor.

In some examples, the one or more inverters are mounted on a frame coupled to the electric motor. In some examples, the mounting of the one or more inverters on the frame coupled to the electric motor provides for a relatively compact overall volume of the propulsor assembly for a given amount of thrust output by the propulsor assembly. In some examples, the mounting of the one or more inverters on the frame coupled to the electric motor provides for a relatively light, relatively rigid, and relatively stable mounting structure for the components of the propulsor assembly.

In some examples, the mounting of the inverters on the frame, and coupling of the frame to the electric motor may position the one or more inverters proximate an electrical connection to the electric motor, providing for a relatively short electrical connection distance between the one or more inverters and the electric motor. In some examples, the mounting of the inverters on the frame, and coupling of the frame to the electric motor define a cooling flow path through the electric motor and the one or more inverters. In some examples, a first fan is coupled to the electric motor, and drives cooling flow in a first direction through the propulsor assembly including the electric motor and the one or more inverters. In some examples, a second fan is coupled to the electric motor, and drives cooling flow in a second direction through the propulsor assembly including the electric motor and the one or more inverters. In some examples, this arrangement of the first fan and/or the second fan directs cooling flow efficiently and effectively through the propulsor assembly, with the electric motor and the one or more inverters sharing cooling flow through the propulsor assembly.

In some aspects, the techniques described herein relate to a motor and inverter assembly, including: a motor, including: a rotor; a stator concentrically arranged with the rotor; a shaft coupled to a central portion of the rotor and configured to transmit a rotational force to a propulsor coupled to the shaft, to drive the propulsor; a first housing coupled to a first end portion of a frame of the stator; and a second housing coupled to a second end portion of the frame of the stator, such that the rotor and the stator are positioned between the first housing and the second housing; and an inverter assembly coupled to the motor, the inverter assembly including: a plurality of inverters; and a plurality of support members coupled between the plurality of inverters and the second housing, to couple the plurality of inverters to the motor.

In some aspects, the techniques described herein relate to a motor and inverter assembly, wherein the first housing includes: a central opening guiding the shaft therethrough; a bearing receptacle defined at the central opening, the bearing receptacle housing a first bearing; a flanged portion formed along a peripheral portion of the first housing; and a plurality of mounting points formed in the flanged portion, wherein the plurality of mounting points are configured to receive a fastener for coupling the motor and inverter assembly to a structural component of an aircraft.

In some aspects, the techniques described herein relate to a motor and inverter assembly, wherein the first bearing is a tapered roller bearing configured to support a load generated in response to rotation of the propulsor, the first bearing including: a first roller bearing received in the bearing receptacle of the first housing, the first roller bearing having a first bearing capacity configured to react to a moment force imparted on the shaft in response to rotation of the propulsor; and a second roller bearing received in the bearing receptacle of the first housing, the second roller bearing having a second bearing capacity configured to react to a thrust load imparted on the shaft in response to rotation of the propulsor.

In some aspects, the techniques described herein relate to a motor and inverter assembly, further including: a first fan coupled to the rotor, positioned between the rotor and the first housing, and configured to rotate with the rotor to draw cooling air from the first housing radially into the motor; and a second fan coupled to the shaft, positioned between the second housing and the inverter assembly, and configured to rotate with the shaft to draw cooling air axially through the motor.

In some aspects, the techniques described herein relate to a motor and inverter assembly, wherein the first housing includes a plurality of openings, and wherein external air is drawn into the second housing through the plurality of openings in response to operation of the first fan and the second fan.

In some aspects, the techniques described herein relate to a motor and inverter assembly, wherein the motor and inverter assembly is configured to be installed within a structure of an aircraft, and wherein air is drawn into the first housing through an air duct on an external surface of the housing in response to operation of the first fan and the second fan.

In some aspects, the techniques described herein relate to a motor and inverter assembly, wherein the first fan is a radial fan, including: a base; a first plurality of vanes disposed on a first side of the base; and a second plurality of vanes disposed on a second side of the base opposite the first side of the base; wherein the first plurality of vanes directs air across at least one of a stator and an air gap between the stator and the rotor, and the second plurality of vanes directs air through a volume that is radially inward of a plurality of magnets mounted on the rotor.

In some aspects, the techniques described herein relate to a motor and inverter assembly, wherein the first fan is a radial fan, including: a base; a first plurality of radially oriented vanes positioned on a first surface of the base; and a second plurality of radially oriented vanes positioned at a second surface of the base.

In some aspects, the techniques described herein relate to a motor and inverter assembly, wherein an outer peripheral shape of the base corresponds to an outer peripheral shape of the rotor.

In some aspects, the techniques described herein relate to a motor and inverter assembly, further including a shroud positioned between the second fan and the plurality of inverters, and coupled to the plurality of support members, the shroud including: a ring portion configured to receive cooling air from the second fan; and a plurality of ducts extending axially from the ring portion, at positions corresponding to the plurality of inverters, and configured to guide cooling air from the ring portion to the plurality of inverters.

In some aspects, the techniques described herein relate to a motor and inverter assembly, wherein each of the plurality of inverters includes: a housing; at least one heat generating component coupled to an interior surface of a side wall of the housing; and a plurality of cooling pins extending outward from an exterior surface of the side wall of the housing, opposite the at least one heat generating component, wherein the plurality of cooling pins are integrally formed with the side wall of the housing so as to absorb heat generated by the at least one heat generating component, and wherein a duct of the plurality of ducts of the shroud is positioned so as to direct cooling air across the plurality of cooling pins.

In some aspects, the techniques described herein relate to a motor and inverter assembly, wherein the plurality of support members includes: a plurality of lateral support members, with a lateral support member of the plurality of support members positioned between adjacent inverters of the plurality of inverters; and a lower support member including a plurality of cross members extending across a lower end portion of the inverter assembly, with end portions of the plurality of cross members coupled to lower end portions of adjacent inverters of the plurality of inverters.

In some aspects, the techniques described herein relate to a motor and inverter assembly, wherein each lateral support member of the plurality of lateral support members includes: a body portion, a shape of the body portion corresponding to a space formed between the adjacent inverters; at least one tab formed at an upper portion of the body portion, providing for coupling of the lateral support member to the second housing; a first flange formed on a first lateral side of the body portion, providing for coupling of the lateral support member to a first inverter of the adjacent inverters; and a second flange formed on a second lateral side of the body portion, providing for coupling of the lateral support member to a second inverter of the adjacent inverters.

In some aspects, the techniques described herein relate to a motor and inverter assembly, further including: a sealed bearing received in one of the first housing or the second housing and supporting the shaft; and a temperature sensor coupled in the one of the first housing or the second housing and configured to detect a grease temperature proximate an outer race of the sealed bearing, wherein the grease temperature is indicative of a condition of the sealed bearing.

In some aspects, the techniques described herein relate to a motor and inverter assembly, wherein the shaft is a hollow shaft configured to receive components of a pitch control mechanism therethrough, coupling an actuation device at a first end portion of the shaft to the propulsor coupled to a second end portion of the shaft.

In some aspects, the techniques described herein relate to a motor and inverter assembly, including: a motor, including a rotor and a stator concentrically arranged with the rotor; a shaft coupled to a central portion of the rotor; a radial fan coupled to the rotor, at a first end portion of the motor, and configured to rotate with the rotor to draw cooling air radially into the motor; an axial fan coupled to the shaft, at a second end portion of the motor, and configured to rotate with the shaft to draw cooling air axially through the motor; an inverter assembly coupled to the motor, the inverter assembly including a plurality of inverters mounted on an inverter frame and coupled to the motor, the plurality of inverters being configured to provide power to the stator; and a shroud positioned between the axial fan and the inverter assembly, and configured to direct cooling air from the axial fan across the plurality of inverters.

In some aspects, the techniques described herein relate to a motor and inverter assembly, wherein the radial fan includes: an annular base; a first plurality of vanes positioned on a first surface of the base; and a second plurality of radially oriented vanes positioned at a second surface of the base, wherein, in response to rotation of the radial fan, cooling air is drawn radially into the motor, and, in response to rotation of the axial fan: a portion of the cooling air drawn in by the radial fan flows between adjacent vanes of the first plurality of vanes and across stator windings of the stator, a portion of the cooling air is guided by the second plurality of vanes and through an air gap between the rotor and the stator, and a portion of the cooling air is drawn into cavities formed between adjacent vanes of the second plurality of vanes, and axially through the motor.

In some aspects, the techniques described herein relate to a motor and inverter assembly, wherein the shroud includes: a ring portion configured to receive cooling air from the axial fan; and a plurality of ducts extending axially from the ring portion, at positions corresponding to the plurality of inverters, wherein, in response to rotation of the axial fan, the cooling air is drawn from the ring portion, accelerated through the plurality of ducts, and directed across the plurality of inverters.

In some aspects, the techniques described herein relate to a motor and inverter assembly, wherein each of the plurality of inverters includes: a housing; and a plurality of cooling pins extending outward from an exterior surface of a side wall of the housing, opposite a at least one heat generating component on an interior surface of the side wall, the plurality of cooling pins absorbing heat generated by the at least one heat generating component, wherein the cooling air is directed from the plurality of ducts and across the plurality of cooling pins to cool the plurality of inverters.

In some aspects, the techniques described herein relate to a motor and inverter assembly, wherein the inverter frame includes a plurality of support members coupling the plurality of inverters to the motor, and positioning the plurality of inverters corresponding to the plurality of ducts of the shroud.

In some aspects, the techniques described herein relate to a motor and inverter assembly, wherein the inverter frame includes: a plurality of lateral support members, with a lateral support member of the plurality of lateral support members coupled between adjacent inverters of the plurality of inverters so as to extend across a space between the adjacent inverters and enclose a space defined by the plurality of inverters and the plurality of lateral support members; and a lower support member including a plurality of cross members extending across a lower end portion of the inverter assembly, with end portions of the plurality of cross members coupled to lower end portions of adjacent inverters of the plurality of inverters.

In some aspects, the techniques described herein relate to a motor and inverter assembly, wherein each of the plurality of lateral support members includes: a body portion, a contour of the body portion corresponding to the space between the adjacent inverters; at least one tab formed at an end portion of the body portion, providing for coupling of the lateral support member to a housing of the motor; a first flange formed on a first lateral side of the body portion, providing for coupling of the lateral support member to a first inverter of the adjacent inverters; and a second flange formed on a second lateral side of the body portion, providing for coupling of the lateral support member to a second inverter of the adjacent inverters.

In some aspects, the techniques described herein relate to a motor and inverter assembly, further including: a first housing coupled to a first end portion of a frame of the stator; a second housing coupled to a second end portion of the frame of the stator, such that the rotor and the stator are positioned between the first housing and the second housing; a first bearing received in a bearing receptacle at a central portion of the first housing, supporting a first end portion of the shaft extending through the central portion of the first housing; and a second bearing received in a bearing receptacle at a central portion of the second housing, supporting a second end portion of the shaft extending through the central portion of the second housing.

In some aspects, the techniques described herein relate to a motor and inverter assembly, wherein: the first housing has a tapered conical shape extending from a central opening through which the first end portion of the shaft extends, to a flanged portion formed along an outer peripheral portion of the first housing, with a plurality of mounting points formed in the flanged portion being configured to receive a fastener for retaining an axial position of the motor and inverter assembly relative to a structural component of an aircraft; and the second housing and the second bearing are configured to retain a radial position of the motor and inverter assembly relative to the structural component of the aircraft.

In some aspects, the techniques described herein relate to a motor and inverter assembly, wherein at least one of the first bearing or the second bearing is a sealed bearing, the motor and inverter assembly further including: a temperature sensor coupled in the respective first housing or second housing and configured to detect a grease temperature proximate an outer race of the sealed bearing, wherein the grease temperature is indicative of a condition of the sealed bearing.

In some aspects, the techniques described herein relate to a motor and inverter assembly, including: a motor, including: a rotor; and a stator concentrically arranged with the rotor; a radial fan coupled to the rotor, the radial fan including: an annular base; a first plurality of vanes on a first side of the base; a second plurality of vanes on a second side of the base, opposite the first side; and an inverter assembly coupled to the motor, including at least one inverter providing power to the stator, wherein, in response to rotation of the radial fan: cooling air is drawn radially into the motor by the first plurality of vanes and the second plurality of vanes; a first portion of cooling air flows in a radial direction along the first side of the base, through adjacent vanes of the first plurality of vanes, and is guided in an axial direction by a stationary shroud coupled radially outward from the radial fan; and a second portion of the cooling air flows in the radial direction along the second side of the base, and is guided in the axial direction by a contour of the second side of the base defining a rotating shroud.

In some aspects, the techniques described herein relate to a motor and inverter assembly, further including: a shaft coupled to a central portion of the rotor and configured to transmit a rotational force to a propulsor coupled to the shaft, to drive the propulsor; a first housing coupled to a first end portion of a frame of the stator; a second housing coupled to a second end portion of the frame of the stator, such that the rotor and the stator are positioned between the first housing and the second housing; a second fan coupled to the shaft, positioned between the second housing and the inverter assembly, and configured to rotate with the shaft to draw cooling air axially through the motor; and a shroud positioned between the second fan and the inverter assembly and configured to guide cooling air to the at least one inverter.

In some aspects, the techniques described herein relate to a motor and inverter assembly, wherein the inverter assembly includes: a plurality of inverters; a plurality of support members, with a support member of the plurality of support members positioned between each pair of adjacent inverters of the plurality of inverters; and a plurality of cross members extending across a lower end portion of the inverter assembly, with end portions of the plurality of cross members coupled to lower end portions of adjacent inverters of the plurality of inverters; and wherein the shroud includes: a ring portion configured to receive cooling air from the second fan; and a plurality of ducts extending axially from the ring portion, at positions corresponding to the plurality of inverters of the inverter assembly, wherein the plurality of ducts are configured to accelerate and guide cooling air from the ring portion to the plurality of inverters

In some aspects, the techniques described herein relate to a motor and inverter assembly, wherein the first housing includes: a central opening through which an end portion of the shaft extends; a flanged portion defining an outer peripheral portion of the first housing; a tapered conical portion extending from the central opening to the flanged portion; a plurality of openings formed in the tapered conical portion configured to guide external air into the motor through the first housing; and a plurality of mounting points formed in the flanged portion and configured to receive a fastener for retaining an axial position of the motor and inverter assembly relative to a structural component of an aircraft in which the motor and inverter assembly is installed.

The details of one or more implementations are set forth in the accompanying drawings and the description below. Other features will be apparent from the description and drawings, and from the claims.

### BRIEF DESCRIPTION OF THE DRAWINGS

FIG. 1A is a perspective view of an example aircraft.
FIG. 1B illustrates an example propulsor assembly of the example aircraft shown in FIG. 1A.
FIG. 2A is a top isometric view of an example motor and inverter assembly.
FIG. 2B is a bottom isometric view of the example motor and inverter assembly shown in FIG. 2A.
FIG. 2C is a bottom view of the example motor and inverter assembly shown in FIGs. 2A and 2B.
FIG. 2D is a top view of the example motor and inverter assembly shown in FIGs. 2A-2C, installed in a structural member of an example aircraft.
FIG. 2E is a cross-sectional view of the example motor and inverter assembly shown in FIGs. 2A-2D, taken along line B-B of FIG. 2C.
FIG. 3A is a first isometric view of rotating components of the example motor and inverter assembly shown in FIGs. 2A-2E.
FIG. 3B is a second isometric view of rotating components of the example motor and inverter assembly shown in FIGs. 2A-2E.
FIG. 3C is a cross-sectional view taken along line C-C of FIG. 3A.
FIG. 4A is a first isometric view of an inverter frame assembly of the example motor and inverter assembly shown in FIGs. 2A-2E.
FIG. 4B is a second isometric view of the inverter frame assembly of the example motor and inverter assembly shown in FIGs. 2A-2E.
FIG. 4C is a cross-sectional view taken along line D-D of FIG. 4A.
FIG. 4D illustrates a duct of the example motor and inverter assembly shown in FIGs. 2A-2E.
FIG. 5A is a close-in view of the cross-sectional view shown in FIG. 2E, illustrating an air flow path through the example motor and inverter assembly shown in FIGs. 2A-2E.
FIG. 5B is a close-in cross-sectional view, illustrating a portion of the air flow path shown in FIG. 5A.
FIG. 5C is a perspective view of an example inverter shown in FIG. 5A.
FIG. 5D is a cross-sectional view of the example inverter shown in FIG. 5C.
FIG. 6A is a cross-sectional view, illustrating an example bearing health monitoring system.
FIG. 6B is a close-in view of an area M shown in FIG. 2E, illustrating an example bearing health monitoring system.
FIG. 7 is a side view of an example motor and inverter assembly.
FIGs. 8A and 8B are side views of an example motor and inverter assembly.

### DETAILED DESCRIPTION

An electric vertical takeoff and landing (eVTOL) aircraft may include at least one propulsor assembly. In some examples, the eVTOL aircraft includes a plurality of propulsor assemblies. In some examples, at least some of the plurality of propulsor assemblies operate as lift propulsors, generating vertical thrust to provide for operation of the eVTOL aircraft in a vertical flight mode, i.e., a vertical takeoff mode of operation and/or a vertical landing mode of operation and/or hover mode of operation and/or a transition phase of flight in which the aircraft is transitioning between a thrust borne phase of flight (e.g. hover), and a wing-borne phase of flight, or fixed wing phase of flight. In some examples, at least one of the plurality of propulsor assemblies generates forward thrust to provide for operation of the eVTOL aircraft in a forward flight mode, or wing-borne flight mode, or fixed wing flight mode.

A propulsor assembly, in accordance with implementations described herein, may be incorporated into an aircraft including a plurality of propulsor assemblies as described above, providing for operation of an aircraft, for example, an eVTOL aircraft, in a vertical phase of flight and/or a transition phase of flight and/or a wing-borne phase of flight. A propulsor assembly, in accordance with implementations described herein, includes a propulsor, or a propeller, or a blade, driven by an electric motor. In some examples, the electric motor receives power from an energy source, for example, one or more batteries, via one or more inverters coupled to the electric motor. In some examples, the one or more inverters convert power, such as, for example, DC power from the energy source, to three-phase AC power, to power the electric motor. In some examples, the one or more inverters are mounted on a frame coupled to the electric motor. This mounting of the one or more inverters on the frame coupled to the electric motor may provide for a relatively compact overall volume of the propulsor assembly for a given amount of thrust to be output by the propulsor assembly, and a relatively light, relatively rigid, and relatively stable mounting structure for the components of the propulsor assembly. In some examples, the mounting of the inverters on the frame coupled to the electric motor may position the one or more inverters proximate an electrical connection to the electric motor, providing for a relatively short electrical connection distance and further reducing an overall volume of the propulsor assembly. In some examples, a cooling flow path is defined through the propulsor assembly, with one or more fans driving cooling flow through the electric motor and across the one more inverters, allowing the electric motor and the one or more inverters to share cooling.

In some examples, the propulsor assembly may include a propulsor, or propeller, or blade, defined by a monolithic structure. The monolithic structure defining the propulsor, or propeller, or blade, may include blade portions that extend radially outward from a hub portion, the blade portions and the hub portion being formed as a single element. In some examples, the propulsor assembly may include a teeter mechanism that allows the blade to pivot, or flap, for example, passively flap, relative to a rotational axis of the propulsor.

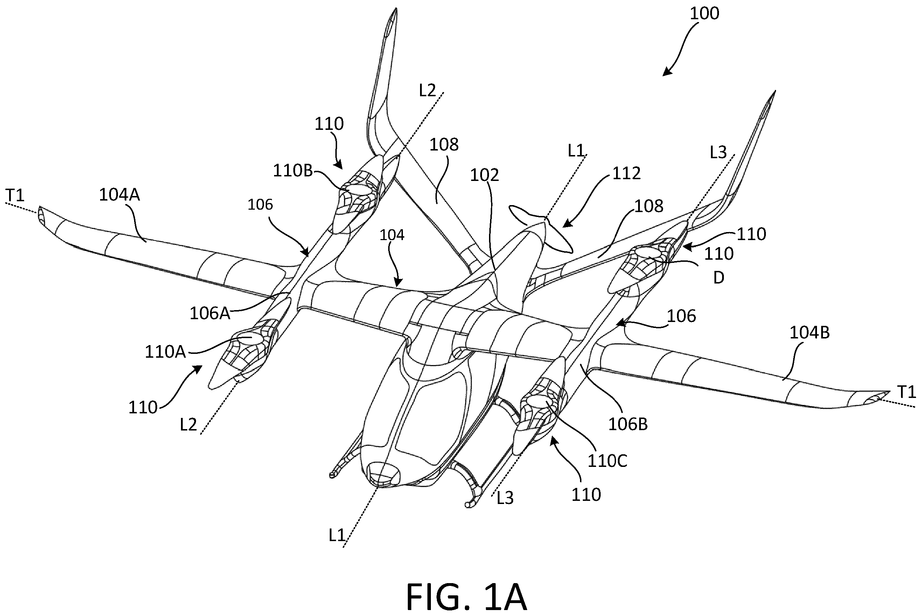

FIG. 1A is a perspective view of an example aircraft 100. The example aircraft 100 shown in FIG. 1A includes a main body, or fuselage 102. In the example arrangement shown in FIG. 1A, laterally extending structural elements, or wings 104, extend outward from opposite lateral side portions of the fuselage 102, in a somewhat transverse arrangement with respect to the fuselage 102. In some examples, a single wing 104 extends across the fuselage 102 and laterally outward from opposite lateral side portions of the fuselage 102. In some examples, the wing 104 includes a first wing 104A extending laterally outward from a first lateral side of the fuselage 102, and a second wing 104B extending laterally outward from a second lateral side of the fuselage 102. In some examples, a cross-sectional geometry of the wings 104 and/or portions thereof have a contour corresponding to an airfoil shape, such that a pressure differential between a lower surface and an upper surface of the wing 104 generates lift during flight of the example aircraft 100. In some examples, control surfaces (not separately labeled in FIG. 1A) are provided on the wings 104, and controlled by a pilot to maneuver the example aircraft 100, for example, when in a wing-borne phase of flight.

In this example, the wings 104 are fixed relative to the fuselage 102, and symmetrically arranged with respect to a longitudinal axis L1 of the fuselage 102 of the example aircraft 100. The wings 104 extend along an axis T1, the axis T1 being transverse to the longitudinal axis L1. In the example arrangement shown in FIG. 1A, a pair of longitudinally extending structural elements, or booms 106, extend longitudinally, between a respective portion of the wing 104 and a tail structure 108 at an aft portion of the fuselage 102. In this example, a first boom 106A of the pair of booms 106 is aligned along a longitudinal axis L2, separated from the longitudinal axis L1, and transverse to the axis T1, and a second boom 106B of the pair of booms 106 is aligned along a longitudinal axis L3, separated from the longitudinal axis L1 of the fuselage 102, and transverse to the axis T1. The example arrangement of the fuselage 102, the wings 104, the booms 106, and the tail structure 108 of the example aircraft 100 shown in FIG. 1A is provided simply for purposes of discussion and illustration. The concepts to be described herein are applicable to other types of aircraft, including different structural components and/or combinations of components, arranged similarly to or differently from what is shown in FIG. 1A.

In the example arrangement shown in FIG. 1A, the example aircraft 100 includes a plurality of propulsor assemblies 110. In this example arrangement, the plurality of propulsor assemblies 110 are configured to generate vertical thrust for operation of the example aircraft 100 in a thrust borne, or vertical, flight mode. In some examples, the plurality of propulsor assemblies 110 can be controlled such that operation of the plurality of propulsor assemblies 110 provides for operation of the example aircraft 100 in the forward, or wing-borne, or fixed wing, flight mode. In the example arrangement shown in FIG. 1A, a first propulsor assembly 110A and a second propulsor assembly 110B are coupled on the first boom 106A, and a third propulsor assembly 110C and a fourth propulsor assembly 110D are coupled on the second boom 106B, simply for purposes of discussion and illustration. The principles to be described herein are applicable to other numbers and/or combinations and/or arrangements of propulsor assemblies.

In the example arrangement shown in FIG. 1A, the example aircraft 100 includes at least one propulsor assembly 112 configured to generate forward thrust for operation of the example aircraft 100 in the forward flight mode, or wing-borne flight mode, or fixed wing flight mode. In the wing-borne flight mode, the example aircraft 100 may use lift provided by the wings 104 in combination with the forward thrust/forward airspeed generated by the at least one propulsor assembly 112. In the example arrangement shown in FIG. 1A, the at least one propulsor assembly 112 is coupled at an aft end portion of the fuselage 102, for operation as a pusher propulsor, simply for purposes of discussion and illustration. The principles described herein are applicable to arrangements in which a forward thrust propulsor is provided at a different location on the aircraft, and/or in which more than one forward thrust generating propulsor is provided and/or at different locations on the aircraft and/or in different orientation(s) on the aircraft.

In some examples, the aircraft 100 is a vertical takeoff and landing (VTOL) aircraft. In some examples, the aircraft 100 is an electric vertical takeoff and landing (eVTOL) aircraft, in which at least one power source (not separately labeled in FIG. 1A) provides power to the propulsor assemblies 110, 112. Hereinafter, simply for purposes of discussion and illustration, operation of the aircraft 100 will be described with respect to propulsor assemblies 110, 112 including at least one electric motor (not separately labeled in FIG. 1A), simply for purposes of discussion and illustration. The principles described herein are applicable to other types of aircraft, including, for example, unmanned aerial vehicles (UAVs), drones, other types of rotorcraft, and the like, that can be powered by various different power sources including, for example, electric motors, conventionally fueled motors, and/or various combinations thereof.

In general, electric motors convert electrical energy into mechanical energy, for example by causing a shaft to rotate. In some examples, an electric motor may be driven by direct current (DC) electric power. In some examples, an electric motor may be driven by electric power having varying or reversing voltage levels, such as alternating current (AC) electric power as produced by an alternating current generator and/or inverter. In some examples, electronic speed controllers and/or other such components may regulate motor speed, direction of rotation, torque output, dynamic braking, and other such operational characteristics of an electric motor. Examples of electric motors include, for example, brushless DC electric motors, permanent magnet synchronous motors, switched reluctance motors, induction motors, and the like.

In some examples, the example aircraft 100 includes an energy source (not separately labeled in FIG. 1A) configured to provide energy to the at least one power source. In an example in which the power source is an electric motor, the at least one energy source may include, for example, at least one battery, or a plurality of batteries connected so as to meet an energy or power requirement for a particular flight plan or series of flight plans of the example aircraft 100. In some examples, the example aircraft 100 incorporates other types of energy sources, instead of, or in addition to, a plurality of batteries, including, for example, a generator, a photovoltaic device, a fuel cell (e.g., a hydrogen fuel cell, direct methanol fuel cell, a solid oxide fuel cell, and the like), other electric energy storage device (e.g. a capacitor, an inductor, and the like), and other such energy sources.

In some examples, the plurality of propulsor assemblies 110 are vertical thrust propulsor assemblies configured to provide vertical thrust when operating the example aircraft 100 in the vertical flight mode, for example, in a vertical takeoff/short takeoff state, a vertical landing/short landing state, a hover state, and the like. In some examples, the at least one propulsor assembly 112 is a forward thrust propulsor assembly configured to provide forward thrust when operating the example aircraft 100 in the forward, or wing-borne, flight mode. In some examples, the vertical thrust propulsor assemblies 110 may be operated to provide for forward thrust, to operate the example aircraft 100 in the forward, or wing-borne, flight mode. In some examples, in the forward, or wing-borne, flight mode, at least some, or all, of the plurality of vertical thrust propulsor assemblies 110 are in a standby mode, such that the example aircraft 100 is propelled forward in response to the thrust generated by forward thrust propulsor assembly 112.

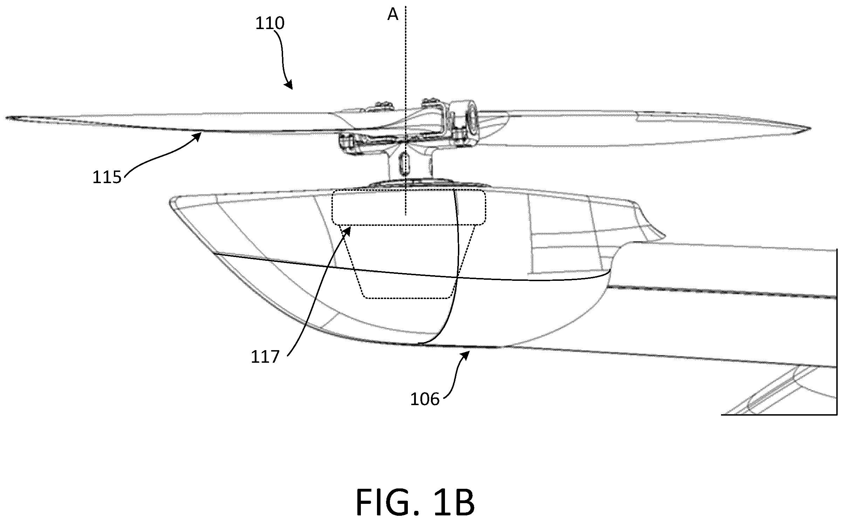

FIG. 1B is a closer in view of the mounting of one of the example propulsor assemblies 110 on the example aircraft 100. As shown in FIG. 1B, the propulsor assembly 110 may be coupled to, or mounted on a structural element of the aircraft, such as, for example, the boom 106 of the example aircraft 100 shown in FIG. 1A, or another structural element, based on a configuration of the aircraft to be powered by the propulsor assembly 110. A propulsor 115 may be mounted on the structural element (for example, the boom 106), and coupled to a power source, for example a motor 117, providing power to drive the propulsor 115. The power source, or motor 117, is shown in shadow in FIG. 1B, at least partially received within the structural element, or boom 106. The propulsor 115 may be coupled to the motor 117 such that the propulsor 115 rotates together with an output shaft of the motor 117 about an axis A. In some examples, a plane of rotation of the propulsor 115, corresponding to a plane in which a blade of the propulsor 115 rotates, is substantially orthogonal to the rotational axis A of the propulsor 115 and the motor 117.

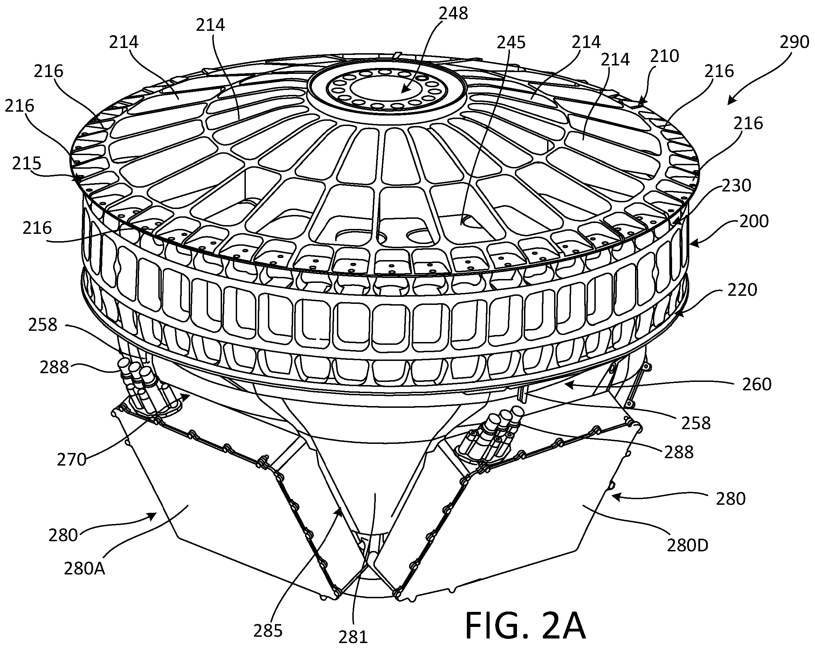

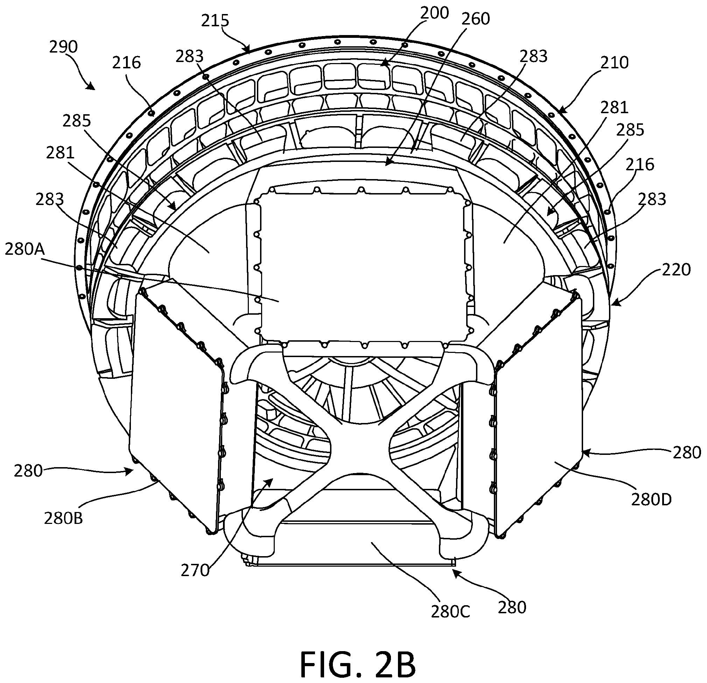

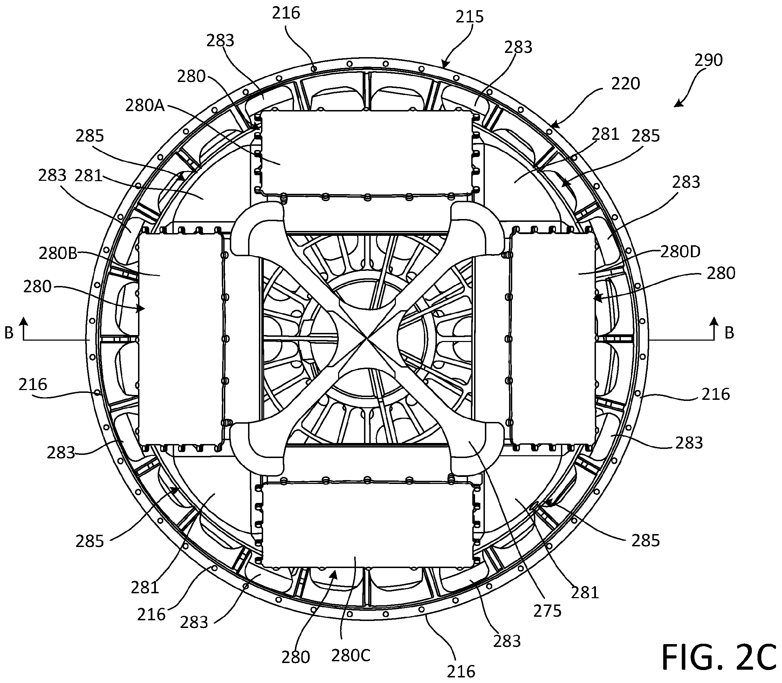

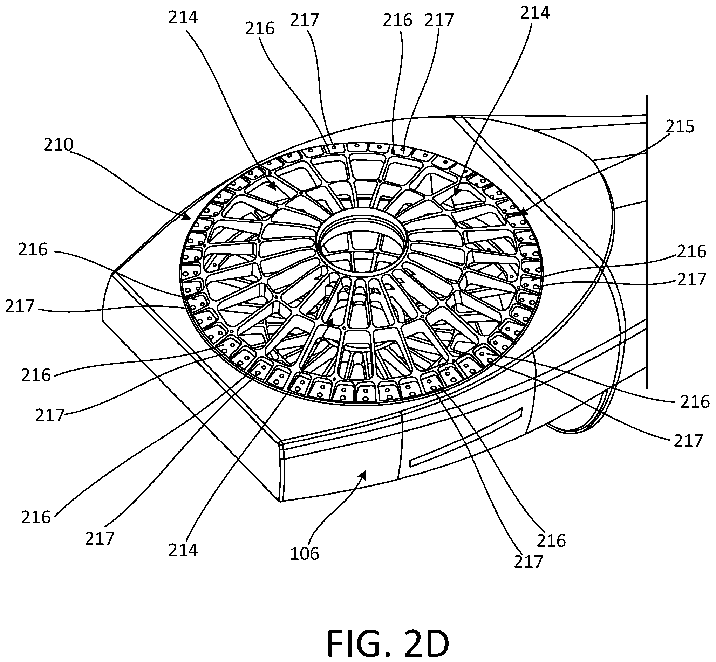

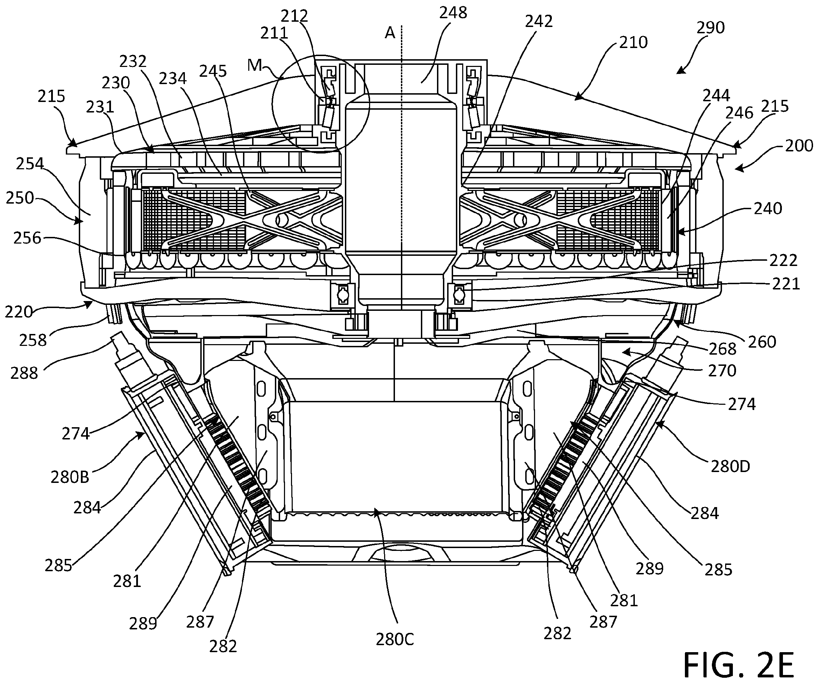

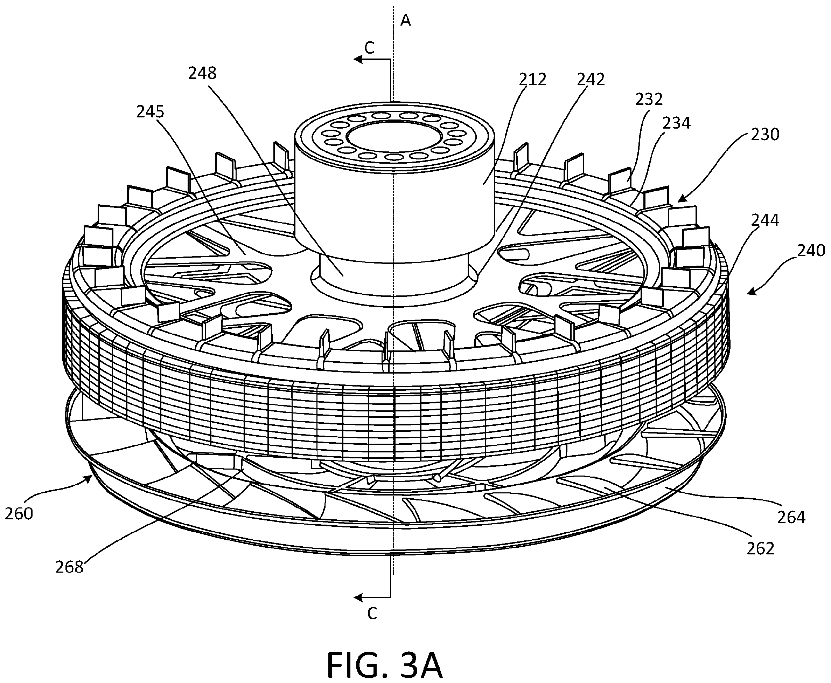

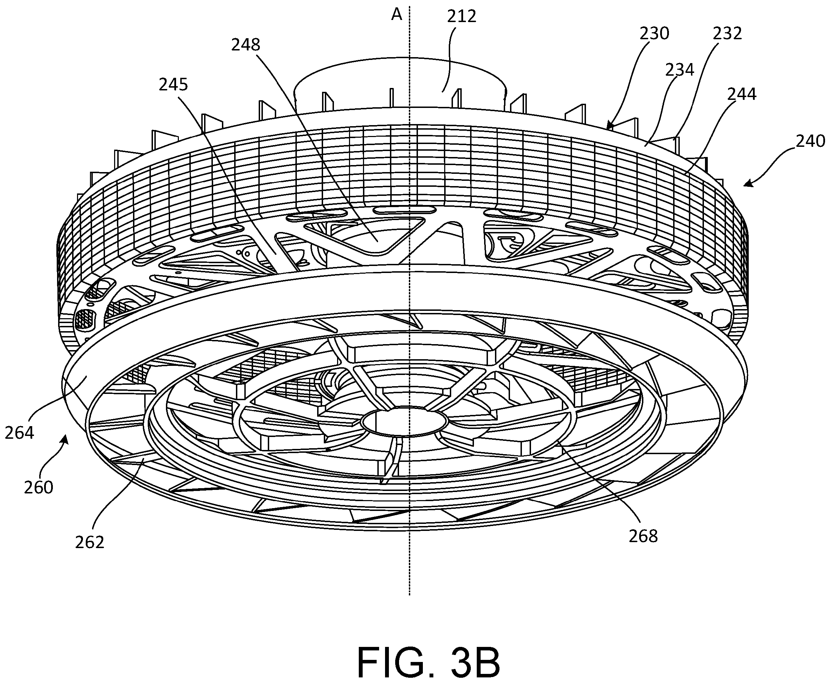

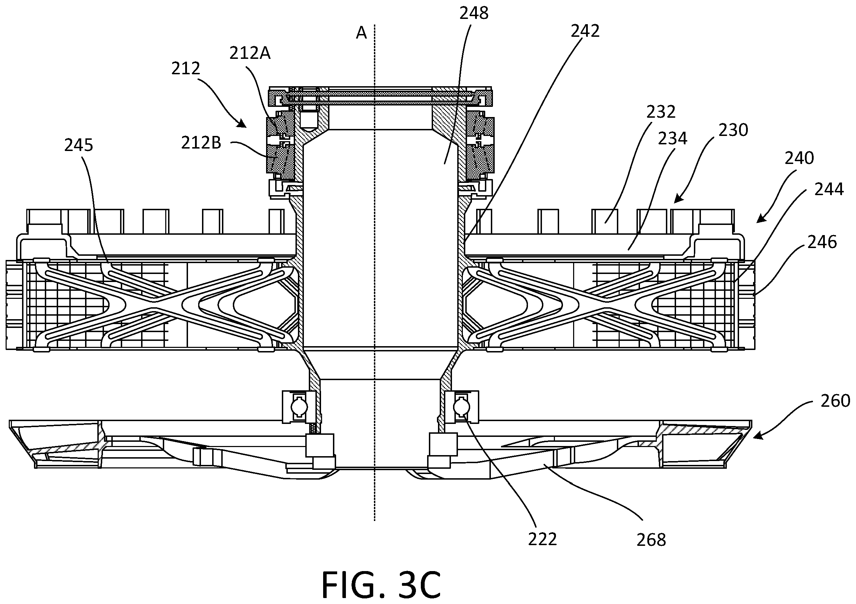

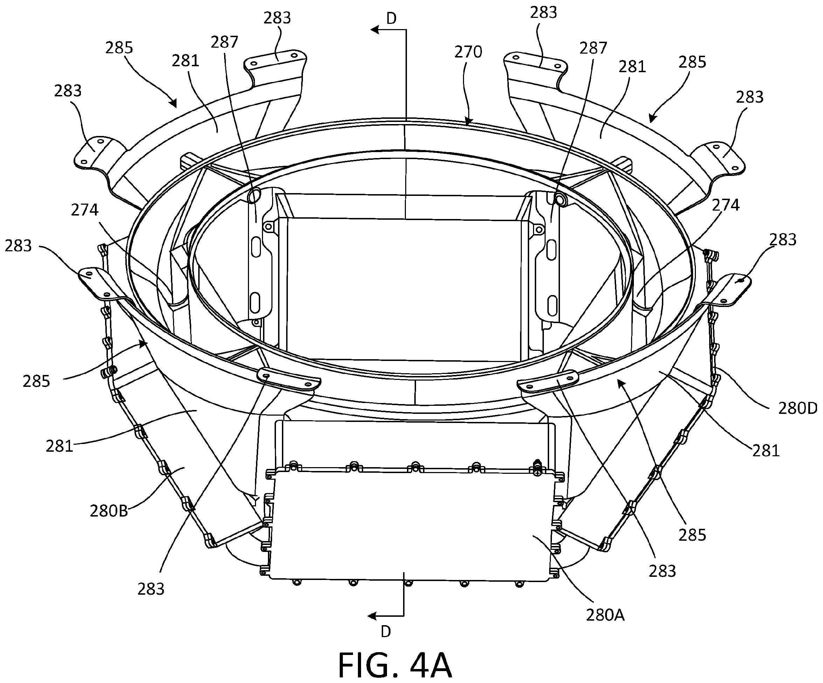

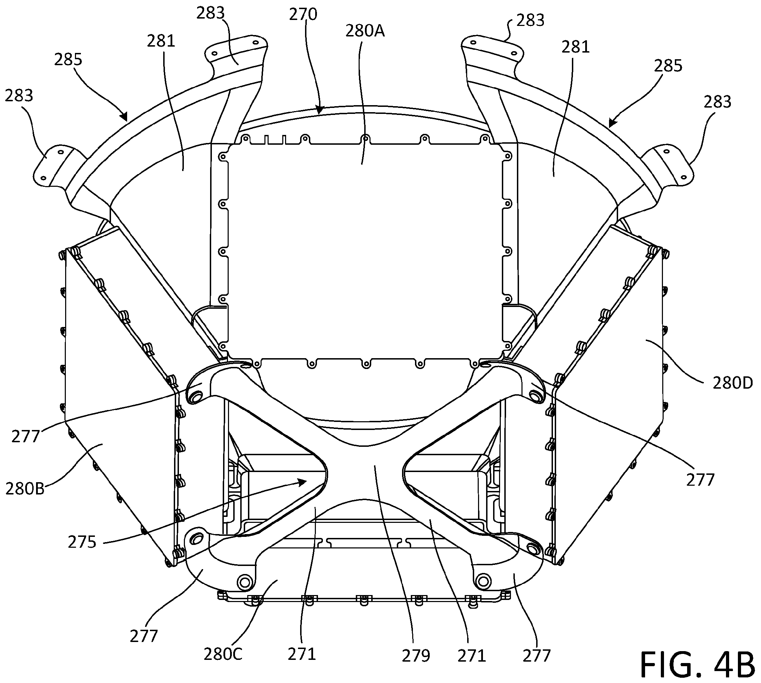

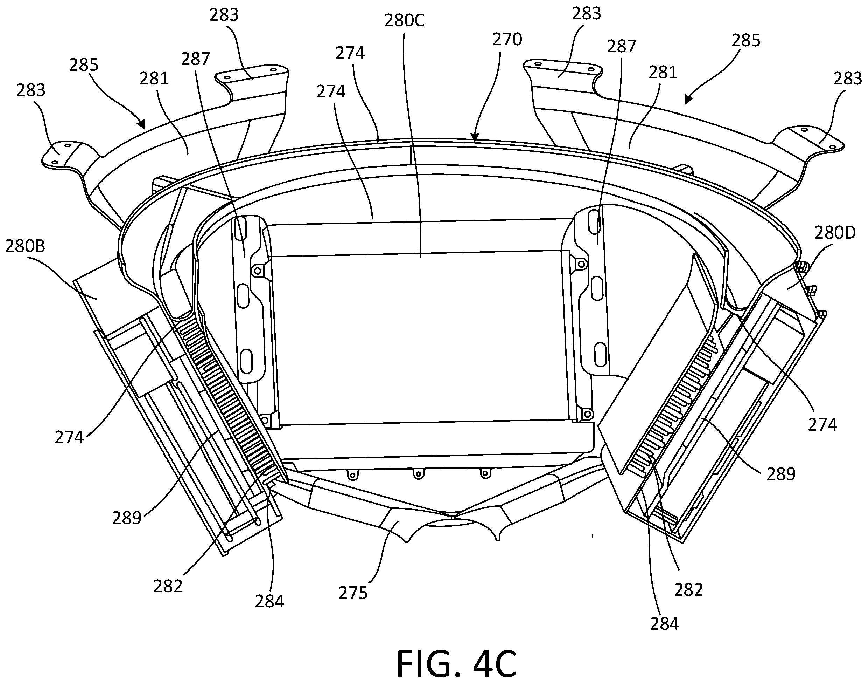

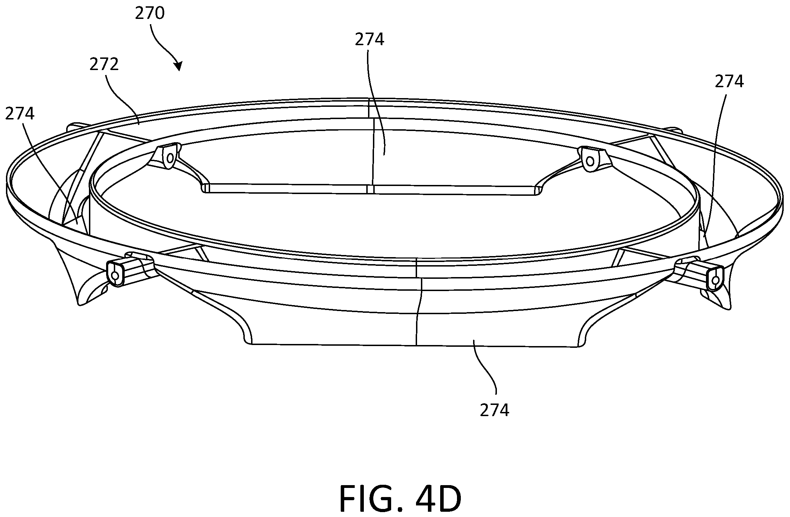

FIGs. 2A-4D illustrate an example motor and inverter assembly 290. The example motor and inverter assembly 290 may be incorporated into a propulsor assembly, such as, for example, one of the propulsor assemblies 110 of the example aircraft 100 shown in FIGs. 1A and 1B. In particular, FIG. 2A is a side view of the example motor and inverter assembly 290. FIG. 2B is a bottom isometric view, and FIG. 2C is a bottom view of the example motor and inverter assembly 290 shown in FIG. 2A. FIG. 2D is a top view of the example motor and inverter assembly 290 shown in FIGs. 2A-2C, installed in a structural member of an example aircraft, such as, for example, the boom 106 of the example aircraft 100 shown in FIGs. 1A and 1B. FIG. 2E is a cross-sectional view of the example motor and inverter assembly 290 shown in FIGs. 2A-2D, taken along line B-B of FIG. 2C. FIG. 3A is a first isometric view, and FIG. 3B is a second isometric view, of rotating components of the example motor and inverter assembly 290 shown in FIGs. 2A-2E. FIG. 3C is a cross-sectional view, taken along line C-C of FIG. 3A. FIG. 4A is a first isometric view, and FIG. 4B is a second isometric view, of an inverter frame assembly of the example motor and inverter assembly 290 shown in FIGs. 2A-2E. FIG. 4C is a cross-sectional view, taken alone line D-D of FIG. 4A. FIG. 4D illustrates a duct of the example motor and inverter assembly 290 shown in FIGs. 2A-2E.

The example motor and inverter assembly 290 includes an electric motor 200, including a rotor 240 and a stator 250 concentrically arranged with the rotor 240. A plurality of inverters 280 provide power from an energy source, such as, for example, one or more batteries, to the stator 250. In some examples, the plurality of inverters 280 convert power, such as, for example, DC power from the energy source, to three-phase AC power, to power the electric motor 200. The example motor and inverter assembly 290 includes four inverters 280 (for example, a first inverter 280A, a second inverter 280B, a third inverter 280C, and a fourth inverter 280D), simply for purposes of discussion and illustration. The principles described herein are applicable to arrangements including more, or fewer, inverters.

In some examples, the stator 250 may have a number of segments that are equal to the number of inverters 280, for example, four segments in the illustrated example. In some examples, the stator 250 may have a concentrated winding design. In some examples, the segments of the stator winding (four segments, in the illustrated example) may be physically separate around the circumference of the stator 250, with each segment being driven by a corresponding one of the four inverters 280. In some examples, the stator 250 may have two three-phase winding systems separated into a plurality of segments, for example, four segments. More generally, a housing 284 of the inverter 280 may include at least one set of three power electronics switches for generating three phase AC power. The motor and inverter assembly 290 may include a plurality of the sets of switches, wherein the number of sets of switches corresponds to a number of stator segments. In a stator having four segments and two three-phase winding systems, the motor and inverter assembly 290 may include eight sets of switches with at least one, and in some examples more than one, set of three switches disposed in the housing 284 of each inverter 280.

In the example arrangement shown in FIGs. 2A-3C, the rotor 240 includes a hub 242 at a central portion of the rotor 240, and a hoop 244 positioned concentrically with respect to the hub 242, defining a rotor frame. A plurality of magnets 246 are positioned along an outer peripheral surface of the hoop 244. In some examples, the hoop 244 is substantially annular. In some examples, one or more structural members 245 extend between the hub 242 and the hoop 244 to maintain structural rigidity of the rotor frame. In some examples, the hub 242, the hoop 244, and the structural member(s) 245 are formed as a single element. In some examples, the hub 242, the hoop 244, and the structural member(s) 245 are separate elements that are fixedly coupled so as to rotate together. In the example arrangement shown in FIGs. 2A-3C, the stator 250 includes a frame 254, with a plurality of stator windings 256 formed on the frame 254 of the stator 250. Current, provided to the electric motor 200 by the plurality of inverters 280 from the energy source, flows through the plurality of stator windings 256, generating a magnetic field that interacts with the plurality of magnets 246 mounted on the hoop 244. The rotor 240 rotates in response to interaction of the plurality of magnets 246 of the rotor 240 with the magnetic field generated by the stator 250. In some examples, the hub 242 defines a central opening in which a shaft 248 is received, such that the shaft 248 extends through the hub 242 at the central portion of the rotor 240. The shaft 248 may be coupled, for example, fixedly coupled in the hub 242, such that the shaft 248 rotates together with the rotor 240, about the axis A. Rotation of the shaft 248 in this manner may, in turn, transmit a rotational force, generated by the rotor 240, to a propulsor, or propeller, or blade (not shown in FIGs. 2A-3C) fixed to the shaft 248, thus rotating the propulsor, or propeller, or blade, and allowing the propulsor assembly to generate thrust. In some examples, the rotor 240 and the shaft 248 may be joined, or fixedly coupled by, for example, welding. This may reduce complexity and/or reduce weight compared to, for example, fastening and/or keyed coupling and/or splined coupling and/or friction coupling, and/or may eliminate complexity associated with high torque connections and/or tight manufacturing tolerances.

In the example arrangement shown in FIGs. 2A-3C, components of the electric motor 200 are received between a first housing 210 and a second housing 220. In the example orientation shown in FIGs. 2A-2E, the first housing 210 may be considered an upper housing, and the second housing 220 may be considered a lower housing. In some examples, the first housing 210 is at least partially exposed at an outer surface of the structural component to which the propulsor assembly is mounted such as, for example, the boom 106 of the example aircraft 100 shown in FIGs. 1A and 1B. In some examples, the propulsor assembly may be mounted to another structural element of the example aircraft 100 such as, for example, the wing 104, the fuselage 102, the tail structure 108, and the like. In some examples, the first housing 210 includes a plurality of openings 214, allowing external air to be drawn into the electric motor 200. In some examples, the first housing 210 includes a plurality of mounting points 216 formed in a flanged portion 215, allowing for mounting of the electric motor 200 to the structural component of the aircraft, and axial retention of the electric motor 200. Put another way, the plurality of mounting points 216 may be formed and positioned for retaining an axial position of the motor and inverter assembly 290 relative to a structural component of an aircraft in which the motor and inverter assembly 290 is installed. In some examples, the plurality of mounting points 216 are formed along a flanged portion 215 of the first housing 210, the flanged portion 215 extending along a peripheral portion of the first housing 210. In some examples, a plurality of fasteners 217 extend through openings formed at the mounting points 216 of the flanged portion 215, and into corresponding openings in the structural element of the aircraft (such as, for example, the boom 106 of the example aircraft 100) to couple the motor and inverter assembly 290 to the aircraft. In the views illustrated in FIGs. 2A-2E only some of the mounting points 216 and some of the plurality of fasteners 217 are labeled. In the examples illustrated in FIGs. 2A-2E, the mounting points 216 are arranged substantially continuously along the flanged portion 215 of the first housing 210, simply for purposes of discussion and illustration. The principles described herein are applicable to other numbers and/or arrangements of the mounting points 216 along the flanged portion 215 of the first housing 210, including, for example, spacing between adjacent mounting points 216, grouping and/or staggering of mounting points 216/groups of mounting points 216 along the flanged portion 215, and the like.

In some examples, a first bearing 212 is positioned in a bearing receptacle 211 formed at a central portion of the first housing 210, concentric with the hub 242 and the shaft 248. In some examples, the first bearing 212 is a tapered roller bearing. In some examples, the first bearing 212 absorbs a load generated due to rotation of the propulsor, or propeller, or blade fixed to the shaft 248. In some examples, a second bearing 222 is positioned in a bearing receptacle 221 formed at a central portion of the second housing 220, concentric with the hub 242 and the shaft 248. In some examples, the second bearing 222 is a roller bearing. In some examples, the second bearing reacts to a radial load generated due to rotation of the components of the rotor 240.

In some examples, the first housing 210 supporting the first bearing 212 has a somewhat tapered, or conical shape, to allow flanged portion 215 of the first housing 210 to be coupled to the structural element of the aircraft (such as, for example, the boom 106 of the example aircraft 100 shown in FIGs. 1A and 1B) at the plurality of mounting points 216. This mounting of the motor and inverter assembly 290 to the structural element of the aircraft at the mounting points 216 defined along the flanged portion 215 of the first housing 210 may provide for axial retention of the electric motor 200, and the motor and inverter assembly including the inverter frame and plurality of inverters 280 coupled to the electric motor 200. This may allow loads generated by a propulsor, or propeller, or blade coupled to the shaft 248 (such as, for example, torque, vibration, and the like) to dissipate into, or be absorbed by, the structural element of the aircraft to which the motor and inverter assembly is mounted, rather than transferring those loads to the electric motor 200 and potentially damaging the electric motor 200. In some examples, the second housing 220 and the second bearing 222 provide radial support of the mounting of the electric motor 200 to the structural element of the aircraft, to retain a radial position of the motor and inverter assembly 290 relative to the structural component of the aircraft. The second housing 220 and second bearing 222 may be somewhat movable axially, to allow for some thermal expansion during operation of the electric motor 200. This arrangement may reduce complexity and/or weight and/or volume compared to a system relying on separate bearings for the power source/motor, and the shaft/propeller.

As noted above, in some examples, the first bearing 212 may be a tapered roller bearing that can provide support in response to both axial forces and radial forces. As shown in FIG. 3C, in some examples, the first bearing 212, in the form of a tapered roller bearing, may include a first roller bearing 212A, and a second roller bearing 212B. In some examples, the first bearing 212 including the first roller bearing 212A and the second roller bearing 212B may be sized to meet the loads exerted at the shaft 248, and in particular, at the upper portion of the shaft proximate the coupling of the propulsor, or propeller, or blade, to the shaft 248 and the electric motor 200. In some examples, a load bearing capacity of the first roller bearing 212A may be different than a load bearing capacity of second roller bearing 212B. For example, the second roller bearing 212B may be larger, or have a greater load bearing capacity, than the first roller bearing 212A, such that the second roller bearing 212B reacts to a thrust load, while the first roller bearing 212A reacts to a moment force imparted on the shaft 248.

In the example arrangement shown in FIGs. 2A-3C, a first fan 230 is mounted on an upper portion of the rotor 240, such that the first fan 230 rotates together with the rotor 240 and the shaft 248. In some examples, the first fan 230 is a radial fan including a plurality of fins, or vanes 232, for example, radially oriented fins, or vanes, mounted on a base 234, that direct cooling air radially outward, for example towards the plurality of stator windings 256. In some examples the base 234 has a substantially annular form. In some examples, the base 234 is contoured, to facilitate the flow of air through the electric motor 200. A second fan 260 is mounted on a lower end portion of the shaft 248, and coupled to the shaft 248 by a shaft coupler 268 such that the second fan 260 rotates together with the shaft 248. In some examples, the second fan 260 positioned, by the shaft coupler 268, at a location that is axially outside of the second bearing 222, and radially outward from the second bearing 222, so as to direct air into a shroud 270. In some examples, the second fan 260 is an axial fan, including a frame 264 and plurality of vanes 262 that draw cooling air axially through the electric motor 200 and into the shroud 270. In some examples, the positioning of the second fan 260 on the shaft 248, below the stator 250, may reduce pressure at the exit of the stator 250 during operation. In some examples, the shroud 270 positioned below the second fan 260 directs cooling air, drawn axially through the electric motor 200 by the second fan 260, towards the plurality of inverters 280, to provide for cooling of the plurality of inverters 280. In some examples, the cooling air is drawn across a plurality of pins 282 formed on a housing 284 of each inverter 280. In some examples, the shroud 270 is coupled to the plurality of inverters 280 and/or to support members 285 positioned between adjacent inverters of the plurality of inverters 280.

In some examples, an inverter frame assembly provides for the mounting of the plurality of inverters 280 and coupling thereof to the electric motor 200. Components of the inverter frame assembly are shown in FIGs. 2A-2E, and FIGs. 4A-4D. In particular, FIGs. 4A-4D illustrate components of the inverter frame assembly of the example motor and inverter assembly 290, without the rotating components shown in FIGs. 3A-3C. Mounting of the plurality of inverters 280 and the electric motor 200 on the inverter frame assembly may allow for a relatively compact and lightweight, and a relatively stable and rigid mounting of these components. This arrangement may allow the plurality of inverters 280 to be positioned in relatively close proximity to the electric motor 200, thus reducing a connection distance between the plurality of inverters 280 and the stator 250. In particular, this arrangement may position an output 288 of the inverter 280 proximate, for example substantially adjacent to, a terminal of lead of the 258 of the stator 250. Additionally, this arrangement may allow the electric motor 200 and the plurality of inverters 280 to share cooling flow, thus enhancing cooling and/or cooling efficiency of the overall system.

In particular, as shown in FIGs. 2A-2E and 4A-4D, the inverter frame assembly includes lateral support members 285 positioned between adjacent inverters 280 of the plurality of inverters 280, with each of the lateral support members 285 coupled to the adjacent inverters 280, and to a lower surface of the second housing 220. A lower support member 275, including a plurality of cross members 271, is coupled to a lower end portion of the inverters 280 and/or to a lower end portion of the lateral support members 285. As shown in FIG. 4B, the cross members 271 of the lower support member 275 extend across, for example, diagonally across, or diametrically across, the lower end portion of the arrangement of the plurality of inverters 280, with end portions 277 of the cross members 271 respectively coupled to lower end portions of adjacent inverters 280. Coupling of the cross members 271 of the lower support member 275 to the inverters 280 in this manner, may provide for lateral stability of the inverter assembly. In some examples, an opening is formed at a central portion 279 of the lower support member 275, for example, at an intersection of the plurality of cross members 271. This may allow a hollow shaft to pass through the opening, and up through the shaft 248 coupled to the rotor 240 and the propulsor, or propeller, or blade. In some examples, positioning of a hollow shaft in this manner may allow for pitch control and/or adjustment components to pass through the center of the motor and inverter assembly 290, allowing for substantially direct connection of pitch control and/or adjustment components to the hub of the propulsor, or propeller, or blade, and providing for a more compact coupling of these components.

In some examples, a contour of the support member 285 corresponds to a contour of a space formed between the adjacent inverters 280, such that the support member 285 substantially spans a gap or space formed between the adjacent inverters 280, defining an internal space bounded by the plurality of inverters 280 and the support members 285. In other words, the configuration of the support members 285 and coupling of the adjacent inverters 280 by the support members 285 in this manner, may enclose a space defined by the plurality of inverters 280 and the support members 285, providing for structural rigidity and further facilitating the flow of air through the motor and inverter assembly 290. In the example arrangement shown in FIGs. 2A-2E, a contour of each of the support members 285 is substantially same, corresponding the arrangement of the plurality of inverters 280. In some examples, the support members 285 may have different contours and/or combinations of contours, to adapt to a particular arrangement of inverters 280. In the example arrangement shown in FIGs. 2A-2E, each of the support members 285 includes a body portion 281, that spans a distance, or fills a gap, between the adjacent inverters 280. In the example arrangement shown in FIGs. 2A-2E, each of the support members 285 includes tabs, or flanges 283 extending from an upper end portion of the body portion 281, to provide for coupling of the support member 285 to the second housing 220. In the example arrangement shown in FIGs. 2A-2E, each of the support members 285 includes tabs, or flanges 287 extending from opposite side portions of the body portion 281, to provide for coupling of the support member 285 to the adjacent inverters 280.

In the example arrangement shown in FIGs. 2A-2E, all of the support members 285 have a substantially conical shape, or wedge shape, simply for purposes of discussion and illustration. As noted above, the principles described herein are applicable to other configurations and/or and/or arrangements of support members. The substantially conical shape, or wedge shape, of the support members 285, the coupling at the lower end portion by the lower support member 275, and the resulting tapered, or conical arrangement of the plurality of inverters 280 shown in FIGs. 2A-2E, may provide for increased strength and/or rigidity of the inverter assembly, and the motor and inverter assembly 290, and may reduce a volume occupied by the inverter assembly, and the motor and inverter assembly 290.

In some examples, the lateral support members 285 are made of a composite material. In some examples, the cross members 271 of the lower support member 275 are made of a composite material. Use of composite materials in the support members 285 and/or the lower support member 275 may reduce weight, and may facilitate fabrication in a desired configuration and/or shape.

In the example arrangement shown in FIGs. 2A-2E, the arrangement of the plurality of inverters 280, the support members 285, and the lower support member 275 defines an inverter frame assembly having a somewhat tapered volume, or shape, or profile, simply for purposes of discussion and illustration. The principles described herein are applicable to other arrangements of these components to produce a desired overall volume, or shape, or profile. In some examples, the tapered volume, or shape, or profile of the example arrangement shown in FIG. 2A-2E may provide for a relatively small, or compact arrangement of these components that is more easily accommodated within a structural component of an aircraft, such as, for example, the boom 106 of the example aircraft 100 shown in FIGs. 2A and 2B.

In this example arrangement, the shroud 270 is positioned between the second fan 260 and the plurality of inverters 280. The shroud 270 includes an annular ring portion 272 defining an airflow channel, and a plurality of outlets, or ducts 274 formed in the annular ring portion 272, at positions corresponding to the plurality of inverters 280. Cooling air is drawn into the electric motor 200 through openings in the first housing 210. The first fan 230 directs the cooling air radially outward, for cooling of the plurality of stator windings 256. The cooling air is drawn axially through the electric motor 200 and across the plurality of inverters 280, via the shroud 270, in response to rotation of the second fan 260. The contour of the annular ring portion 272 of the shroud 270, and the positioning of the plurality of outlets, or ducts 274 and contours of the individual ducts 274 define independent flow paths that direct dedicated cooling air towards each of the plurality of inverters 280. As the first fan 230 is coupled to the rotor 240, and the second fan 260 is coupled to the shaft 248, the first fan 230 and the second fan 260 rotate whenever the electric motor 200 of the propulsor assembly is in operation, providing for a substantially continuous flow of cooling air through the motor and inverter assembly 290 during operation of the propulsor assembly.

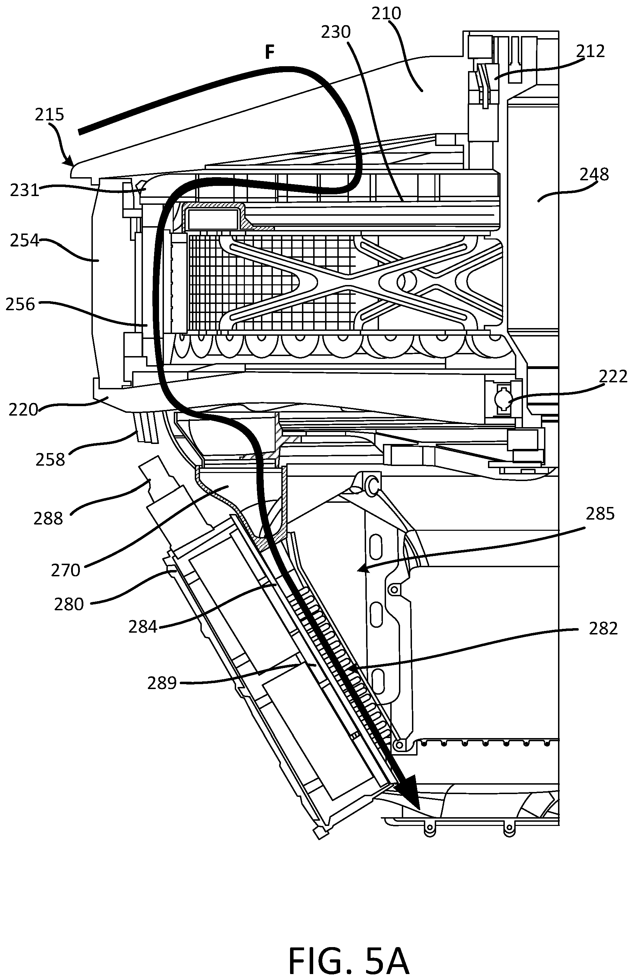

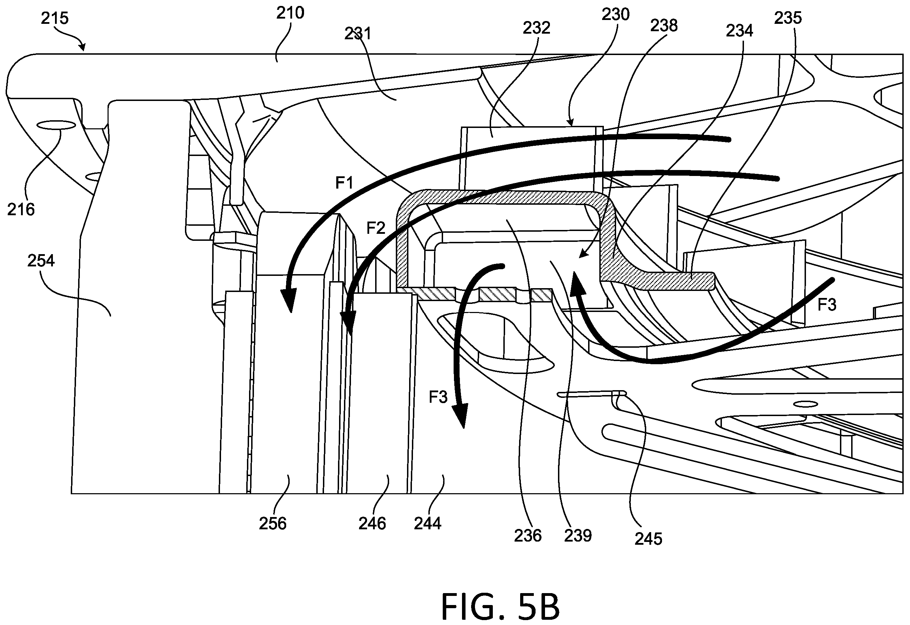

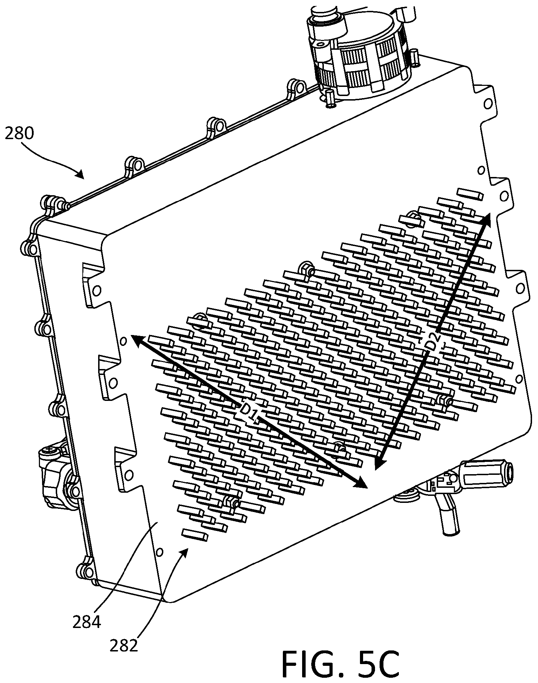

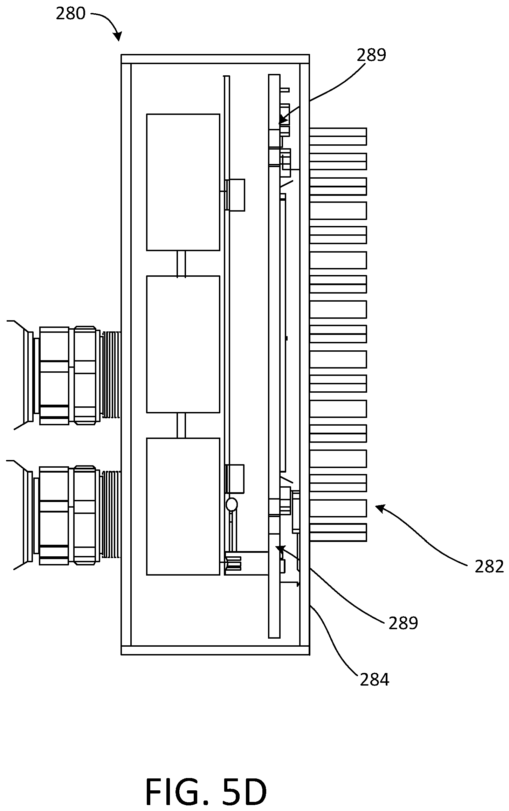

The cooling air flow path through the example motor and inverter assembly 290 will be described in more detail with respect to FIGs. 5A-5D. In particular, FIG. 5A is a partial cross-sectional view, illustrating a cooling air flow path F through the example motor and inverter assembly 290 shown in FIGs. 2A-2E. FIG. 5B is a close-in, detailed cross-sectional view, illustrating the cooling air flow path F through the first housing 210 and the motor. FIG. 5C is a perspective view of one of the plurality of inverters 280, illustrating a plurality of pins 282, for example cooling pins, formed on the housing 284 of the inverter 280, and in particular on an exterior surface of a side wall of the housing 284. FIG. 5D is a cross-sectional view of one of the plurality of inverters 280, illustrating internal components of the inverter 280, and thermal coupling of the components to the plurality of pins 282 and the housing 284 of the inverter 280.

As shown in FIG. 5A, cooling air is drawn into the example motor and inverter assembly 290 through openings in the first housing 210. Rotation of the first fan 230 (together with the rotor 240) directs the colling air radially outward, through spaces formed between adjacent vanes of the plurality of vanes 232, and through spaces formed between adjacent teeth of the plurality of stator windings 256, for cooling of the plurality of stator windings 256. Rotation of the second fan 260 (together with the shaft 248) draws the cooling air axially through the electric motor 200 and into the shroud 270, where the cooling air is distributed, via the plurality of outlets, or ducts 274, to the plurality of inverters 280.

As shown in more detail in FIG. 5B, in some examples, an outer periphery of the first fan 230 corresponds to an outer periphery of the rotor 240, with the first fan 230 being coupled to the rotor 240 at the hoop 244 of the rotor 240. A contour of the first fan 230 is defined by a flanged portion 235 that transitions into a protruded portion 236. The plurality of vanes 232 are positioned, for example, radially oriented, on a first surface of the protruded portion 236 of the base 234. The protruded portion 236 defines a cavity 238 along a second surface of the protruded portion 236 of the base 234. A plurality of vanes 239, for example, radially oriented vanes, are provided in the cavity 238.

As shown in FIG. 5B, cooling air, drawn into the motor and inverter assembly 290 through the openings in the first housing 210, is distributed by the positioning of the plurality of vanes 232, together with the contour of the base 234 of the first fan 230. As shown in FIG. 5B, a first portion of this cooling air flows in the direction of the arrow F1, through the spaces formed between adjacent vanes 232, guided by a stationary shroud 231 coupled to the frame 254 of the stator 250, and through the spaces formed between adjacent teeth of the plurality of stator windings 256, axially through the electric motor 200. A second portion of this cooling air flows in the direction of the arrow F2, through the spaces formed between adjacent vanes 232, and through a space, for example, an air gap, formed between the teeth of the plurality of stator windings 256 and the and the plurality of magnets 246 mounted on the outer peripheral surface of the hoop 244 of the rotor 240, axially through the electric motor 200. As the radial flow of cooling air (the first portion and the second portion of the cooling air) encounters stationary shroud 231, the direction of the flow of cooling air changes, from a radial flow of cooling air through the first fan 230, to an axial flow of cooling air exiting the first fan 230 and through the plurality of stator windings 256 and across the plurality of magnets 246.

A third portion of this cooling air flows in the direction of the arrow F3, through openings formed in the structural member 245 or between structural member(s) 245, through the cavity 238 defined by the protruded portion 236 of the base 234, and axially through the electric motor 200. In this example arrangement, the contour of the base 234 defining the cavity 238 at the second side of the base 234 forms a rotating shroud that turns a direction of the cooling air, from the radial flow entering the cavity, to axial flow exiting the cavity 238. As the shroud defined by the cavity 238 at the second side of the base 234 is coupled to the rotor 240, the shroud defined in this manner is stationary with respect to the rotor frame of reference, but is rotating in the global, the motor frame of reference. The cavity 238 and the plurality of vanes 239, together with the rotation of the first fan 230 (and the rotation of the second fan 260) draws the cooling air in the direction of the arrow F3, through the cavity 238 and axially through the electric motor 200. Rotation of the second fan 260 draws the first, second and third portions of the cooling air flow described above axially through the electric motor 200, and into the shroud 270. Once in the annular ring portion 272 of the shroud 270, the cooling air flows through the plurality of outlets, or ducts 274, which guide the cooling air to a respective inverter 280. In some examples, separation of the cooling air flow into individual segments, and guiding of the cooling air flow through the individual ducts 274 of the shroud 270 may accelerate the flow of cooling air that is introduced into the inverter frame assembly, for cooling of the plurality of inverters 280.

In particular, the cooling air flows across the plurality of plurality of pins 282 that extend outward from the exterior side wall of the housing 284 of the inverter 280, to cool the inverter 280. As shown in FIGs. 5C and 5D, heat generating components 289 of the inverter 280 may be mounted directly on the housing 284, in particular, on an interior facing surface of the side wall of the housing 284, opposite the exterior surface on which the plurality of pins 282 are integrally formed. In this manner, heat generated by the heat generating components received in the housing 284 may be conveyed to the plurality of pins 282 via the surface of the housing 284 on which the plurality of pins 282 are formed. In some examples, the plurality of pins 282 are machined at the surface of the housing 284, such that the housing 284, and in particular, the side wall of the housing 284, and the plurality of pins 282 are integrally formed. In some examples, the plurality of pins 282 are machined into the surface of the housing 284 by machining a first plurality of channels in a first direction D1, and a second plurality of channels in a second direction D2. In some examples the first plurality of channels formed in the first direction D1 are oriented in parallel to each other. In some examples, the second plurality of channels formed in the second direction D2 are formed in parallel to each other. In some examples, machining the plurality of pins 282 in this manner produces pins having a substantially square, or rectangular cross-sectional shape. In some examples, the plurality of pins 282 integrally formed on the housing 284, and in particular on the exterior surface of the side wall of the housing 284 of the inverter 280, with heat generating components 289 mounted on the interior surface of the side wall of the housing 284 as shown, eliminates the need for a separate heat sink coupled to the inverter 280, thus reducing weight and volume associated with each of the inverters 280. In some examples, the plurality of pins 282 integrally formed on the exterior surface of the side wall of the housing 284 of the inverter 280, with heat generating components 289 mounted on the interior surface of the side wall of the housing 284 as shown, more efficiently dissipates heat, as there are fewer interfaces between the heat generating components 289 and the heat elimination mechanism (i.e., the plurality of pins 282, as compared to a separately coupled heat sink) to create contact resistance.

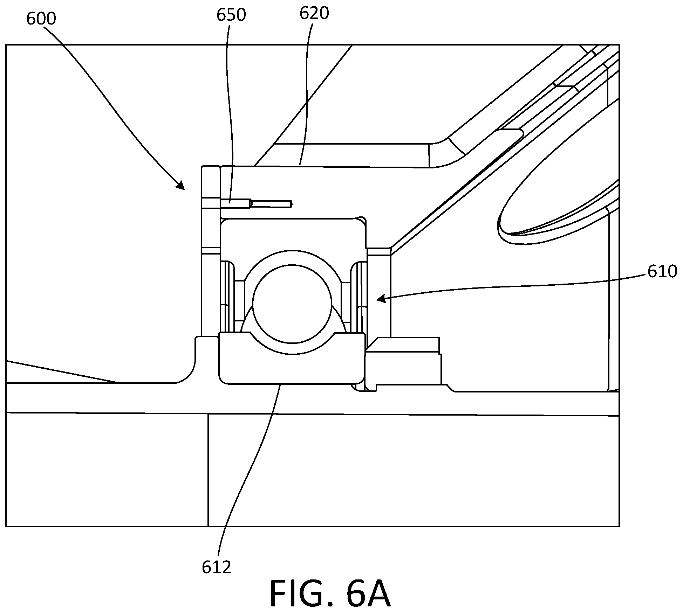

FIG. 6A illustrates an example bearing health monitoring system that relies on temperature monitoring to assess and/or predict bearing health and operability. In particular, the bearing health monitoring system relies on temperature monitoring of a greased sealed bearing assembly to assess and/or predict bearing health and/or continued operability. The bearing health monitoring system can be incorporated into the electric motor 200/motor and inverter assembly 290 described above, and in particular to the first bearing 212 and/or the second bearing 222 described above, and/or other applications in which the monitoring of bearing health is beneficial in system performance and/or reliability and/or durability.

Typically, engines/motors, particularly in aviation applications, circulate lubrication fluid, such as oil, to provide for bearing lubrication. These types of systems rely on chip detectors and/or vibration monitoring to detect bearing condition, providing reactive, and not predictive, bearing health monitoring. That is, these types of indicators (chips detected in lubrication fluid, vibration levels beyond set thresholds) are only present after bearing material has been damaged or degraded, indicating imminent failure. In some situations, detection of bearing condition using these systems may not provide sufficient indications of degraded bearing condition until the bearing is at imminent failure, which could compromise overall system operability and/or integrity and/or safety. Further, in a system in which lubrication fluid, such as oil, is circulated and/or replenished through the system, temperature alone of the lubrication fluid does not provide an indication of bearing condition. A bearing health monitoring system, in accordance with implementations described herein, monitors grease temperature to assess life of a sealed bearing during operation. Due to the properties of the grease and the properties of the materials of the bearings, this bearing health monitoring system provides a predictive indicator of bearing condition, and bearing degradation. In an aviation application, this system may provide sufficient warning of degradation of bearing material(s), in advance of failure, to provide an ample window for repair and/or replacement, and prevent in flight bearing failure.

FIG. 6A is a cross-sectional view of an example sealed bearing assembly including a bearing health monitoring system 600, in accordance with implementations described herein. The example sealed bearing assembly includes a sealed roller bearing 610 received in a bearing housing 620, supporting an outer race 612 of the bearing 610. A temperature sensor 650 is installed in the bearing housing 620, to detect a temperature proximate the sealed roller bearing 610. In some examples, the temperature sensor 650 detects a temperature of grease received in a grease channel, for example, proximate the outer race 612 of the bearing 610. In some examples, the temperature sensor 650 detects a temperature of a part, for example, a metal part, proximate the outer race 612 of the sealed roller bearing 610. A temperature detected by the temperature sensor 650 may be indicative of degradation of the grease, and a corresponding condition of the bearing 610, and can provide an early indication of degradation of the bearing 610. That is, degradation of the grease will cause an increase in friction during operation of the bearing 610. This increase in friction generates heat, which will be reflected in the temperature detected by the temperature sensor 650. In this system, there is no circulation of lubrication fluid, and thus the increased friction can be detected based on the increase in temperature detected by the temperature sensor 650. As the grease degrades well before the bearing 610 experiences material degradation, a rise in temperature detected by the temperature sensor 650 can provide a first, early indication of initial bearing wear. For example, once the temperature detected by the temperature sensor 650 exceeds a normal operating temperature by, for example, a set threshold, a maintenance action may be triggered, to remove and replace the bearing 610, and the like.

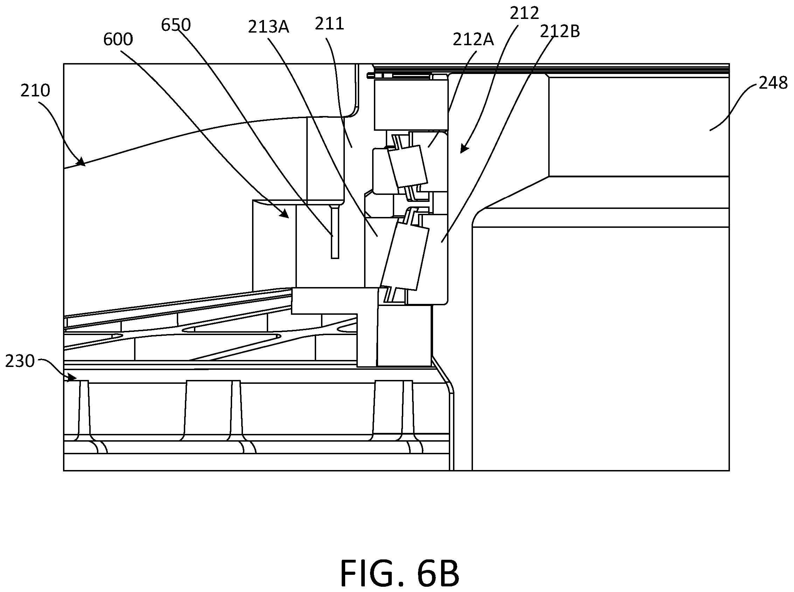

FIG. 6B is a close-in view of an area M shown in FIG. 2E, illustrating the example bearing health monitoring system 600 installed in the first housing 210 of the example electric motor 200, to provide for health monitoring of the first bearing 212 housed in the bearing receptacle 211 of the first housing 210. In the example arrangement shown in FIG. 6B, the temperature sensor 650 is positioned to monitor a temperature at the bearing receptacle 211 formed in the first housing 210, proximate the second roller bearing 212B of the first bearing 212, for example, proximate an outer race 213B of the second roller bearing 212B. In an example in which the second roller bearing 212B is a greased sealed roller bearing, the temperature sensor 650 may detect a temperature of grease received in a grease channel proximate the second roller bearing 212B, and/or may detect a temperature of a metal component proximate the outer race 213B of the second roller bearing 212B, to in turn predict degradation of the second roller bearing 212B as described above.

The bearing health monitoring system 600 is described with respect to the sealed roller bearing 610, simply for purposes of discussion and illustration. The principles described herein are applicable to other bearings, including, for example, the first bearing 212 and/or the second bearing described above, and/or other bearings not explicitly shown herein.

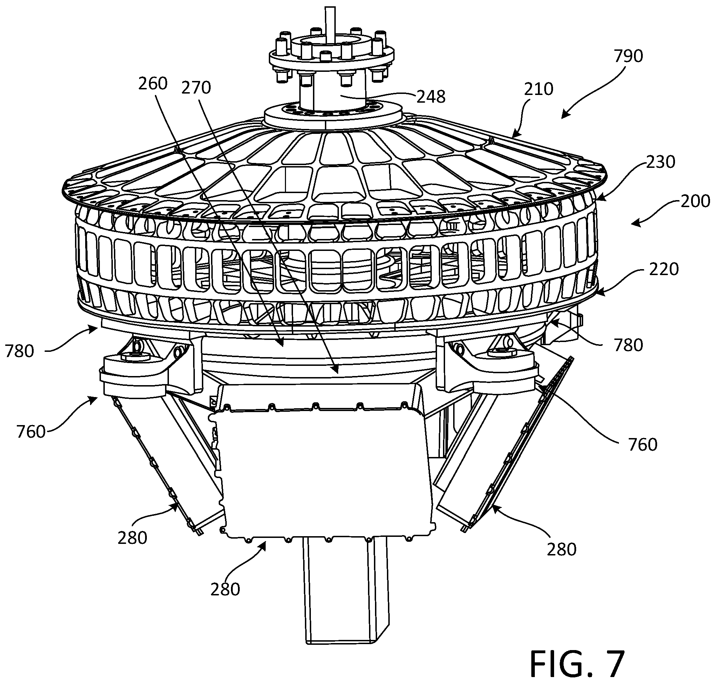

FIG. 7 is a side view of an example motor and inverter assembly 790, in accordance with implementations described herein. The example motor and inverter assembly 790 shown in FIG. 7 may include components similar to those of the motor and inverter assembly 290 described above with respect to FIGs. 2A-5D, and thus duplicative detailed description will be omitted.

In the example motor and inverter assembly 790 shown in FIG. 7, the support members 285 included in the motor and inverter assembly 290 described above with respect to FIGs. 2A-5D have been replaced with support members 780. The support members 780 are positioned between adjacent inverters 280, to maintain a relative position of the plurality of inverters 280, and to provide structural rigidity of the inverter frame assembly, and coupling of the plurality of inverters 280 to the electric motor 200, to provide for an integrated motor and inverter assembly 790 as described above with respect to the integrated motor and inverter assembly 290. The support members 780 are adapted to provide for the coupling of mounting members 760 thereto. The mounting members 760, in turn, provide for the mounting of the motor and inverter assembly 790 to a structural element of an aircraft, such as, for example, the boom 106 of the example aircraft 100 described above, or another aircraft not explicitly described herein. In some examples, the support members 780 include vibration damping members, to provide for vibration damping and isolation when the motor and inverter assembly 790 is mounted in and/or on the aircraft. In some examples, the vibration damping members may include, for example, a high capacity laminated silicone material, or other such damping material that can provide for damping and isolation.

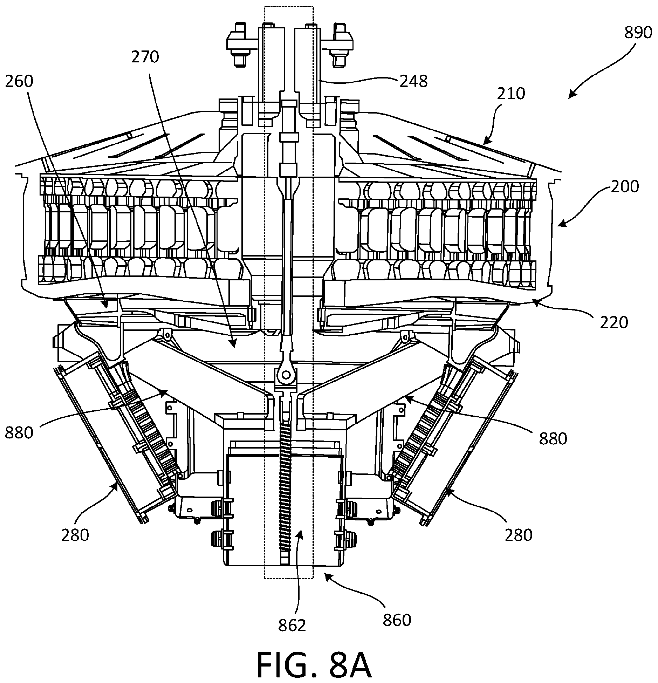

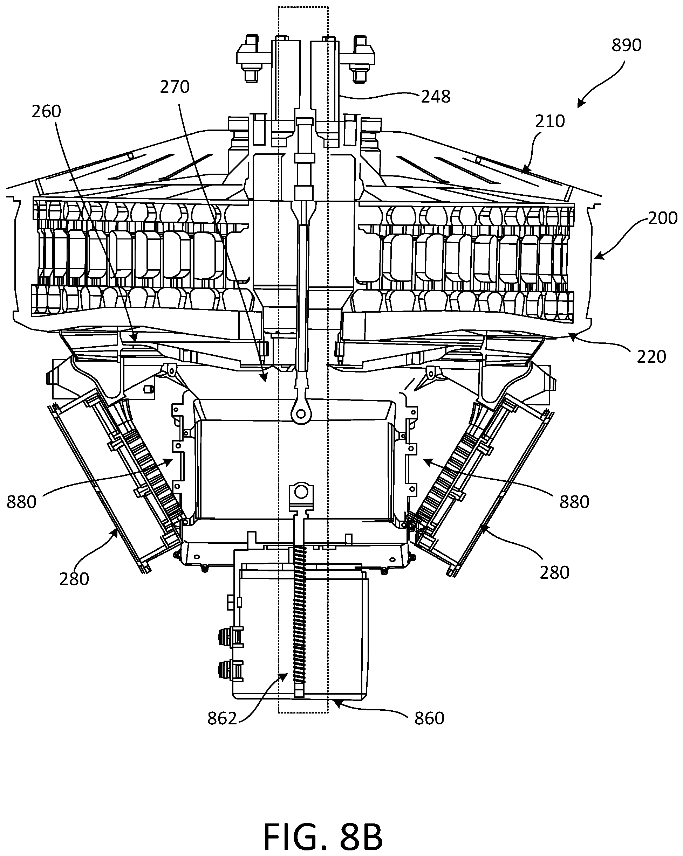

FIGs. 8A and 8B are schematic views of an example motor and inverter assembly 890, in accordance with implementations described herein. The example motor and inverter assembly 890 shown in FIGs. 8A and 8B may include components similar to those of the motor and inverter assembly 290 described above with respect to FIGs. 2A-5D, and thus duplicative detailed description will be omitted

FIGs. 8A and 8B schematically illustrate an example pitch control mechanism 860 incorporated into the example motor and inverter assembly 890. Actuation components 862 of the pitch control mechanism 860 may be received through a hollow interior portion of the shaft 248 and an interior space of the motor and inverter assembly 890 defined by the arrangement of the plurality of inverters 280. The support members 285 included in the motor and inverter assembly 290 described above with respect to FIGs. 2A-5D have been replaced with support members 880 in the example motor and inverter assembly 890 shown in FIGs. 8A and 8B. The support members 880 are positioned between adjacent inverters 280, to maintain a relative position of the plurality of inverters 280, and to provide structural rigidity of the inverter frame assembly, and coupling of the plurality of inverters 280 to the electric motor 200, to provide for an integrated motor and inverter assembly 890, as described above with respect to the integrated motor and inverter assembly 290. The support members 880 are adapted to provide for accommodating the actuation components 862 of the pitch control mechanism 860 within the interior space defined by the arrangement of the plurality of inverters 280, while still providing the desired rigidity of the inverter frame assembly coupled with the electric motor 200. FIG. 8A illustrates the pitch control mechanism 860 in a first state, in which the actuation components 862 of the pitch control mechanism 860 are moved into engagement, to effect pitch control of a propulsor, or propeller, or blade (not shown in FIG. 8A) coupled to the shaft 248. FIG. 8B illustrates the pitch control mechanism 860 in a second state, in which the actuation components 862 of the pitch control mechanism 860 are disengaged.

The foregoing description has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

In some aspects, the techniques described herein relate to a propulsor assembly, including: a motor; a blade driven by the motor, the blade including: a hub portion; a first blade portion extending radially outward from the hub portion; and a second blade portion extending radially outward form the hub portion; and a coupling assembly coupling the blade to a shaft of the motor such that the blade rotates together with the shaft about a first axis, the coupling assembly including at least one bearing coupling the blade to the shaft of the motor, wherein the coupling assembly defines a teeter mechanism that allows for pivoting of the blade about a second axis extending through the hub portion and oriented at an angle with respect to the first axis in response to external forces applied to at least one of the first blade portion or the second blade portion of the blade, and a stiffness of the at least one bearing exerts a biasing force, or a centering force, or a restoring force, that urges the blade to a neutral position.

In some aspects, the techniques described herein relate to a propulsor assembly, wherein the coupling assembly also includes: a yoke coupled to the shaft of the motor; and at least one bracket coupled to a side portion of the hub portion of the blade.

In some aspects, the techniques described herein relate to a propulsor assembly, wherein the at least one bracket includes: a first arm portion fixed to an upper surface portion of the hub portion of the blade; a second arm portion fixed to a lower surface portion of the hub portion of the blade; and a base portion extending from the first arm portion and the second arm portion, and coupled in the at least one bearing.

In some aspects, the techniques described herein relate to a propulsor assembly, wherein the at least one bearing is a torsional bearing, including: an elastomeric member having an inner surface portion defining a central opening and an outer surface portion, wherein the base portion of the at least one bracket is coupled to one of the inner surface portion or the outer surface portion; and a bearing housing fixed to the yoke, wherein the elastomeric member is coupled to the bearing housing.

In some aspects, the techniques described herein relate to a propulsor assembly, wherein the outer surface portion of the elastomeric member is fixedly coupled to an inner surface portion of the bearing housing, and an inner surface portion of the elastomeric member is fixedly coupled to an outer surface portion of the base portion of the at least one bracket.

In some aspects, the techniques described herein relate to a propulsor assembly, wherein the elastomeric member is substantially cylindrical.

In some aspects, the techniques described herein relate to a propulsor assembly, wherein the elastomeric member is substantially conical.

In some aspects, the techniques described herein relate to a propulsor assembly, wherein the base portion and the elastomeric member are concentrically arranged about the second axis such that, in response to a pivoting of the blade in a first rotational direction about the second axis, the elastomeric member exerts a biasing force, or a centering force, or a restoring force on the hub portion of the blade in a second rotational direction that is opposite the first rotational direction.

In some aspects, the techniques described herein relate to a propulsor assembly, wherein, in response to the pivoting of the blade about the second axis, a displacement of a tip end portion of the second blade portion of the blade is opposite and substantially equal to a displacement of a tip end portion of the first blade portion of the blade.

In some aspects, the techniques described herein relate to a propulsor assembly, wherein the blade is a monolithic blade including the hub portion, the first blade portion, and the second blade portion formed as a single element.

In some aspects, the techniques described herein relate to a propulsor assembly, wherein a pitch angle of the first blade portion and the second blade portion are not independently adjustable.

In some aspects, the techniques described herein relate to a propulsor assembly, wherein the coupling assembly includes: a first bracket fixed to a first side portion of the hub portion of the blade; a second bracket fixed to a second side portion of the hub portion of the blade; a first elastomeric bearing coupled between the first bracket and a corresponding portion of a yoke coupled to the shaft of the motor; and a second elastomeric bearing coupled between the second bracket and a corresponding portion of the yoke.

In some aspects, the techniques described herein relate to a propulsor assembly, wherein at least one of the first elastomeric bearing or the second elastomeric bearing is a high capacity laminated bearing, wherein a stiffness of the first elastomeric bearing and the second elastomeric bearing restricts a pivoting motion of the blade about the second axis to within a preset range.

In some aspects, the techniques described herein relate to a propulsor assembly, wherein, in response to a pivoting of the blade in a first rotational direction about the second axis, the first elastomeric bearing and the second elastomeric bearing exert a biasing force, or a centering force, or a restoring force on the hub portion of the blade in a second rotational direction that is opposite the first rotational direction.

In some aspects, the techniques described herein relate to a propulsor assembly, wherein a combined stiffness of the first elastomeric bearing and the second elastomeric bearing is in a range of between approximately 120 foot-pounds of force per degree and approximately 150 foot-pounds of force per degree.

In some aspects, the techniques described herein relate to a propulsor assembly, wherein the second axis extends from a center of rotation of the first elastomeric bearing to a center of rotation of the second elastomeric bearing.

In some aspects, the techniques described herein relate to a propulsor assembly, wherein a central axis of the hub portion of the blade is offset from a central axis of the blade, the central axis of the blade corresponding to a span of the blade extending from a tip end portion of the first blade portion to a tip end portion of the second blade portion of the blade.

In some aspects, the techniques described herein relate to a propulsor assembly, wherein the second axis is oriented at approximately 45 degrees relative to a span of the blade extending from a tip end portion of the first blade portion to a tip end portion of the second blade portion of the blade.

In some aspects, the techniques described herein relate to a propulsor assembly, wherein, in response to an external force applied to one of the first blade portion or the second blade portion: the blade pivots about the second axis such that a plane of rotation of the blade is tilted; and a degree of pivoting of the blade is restricted in response to a biasing force, or a centering force, or a restoring force exerted by the at least one bearing.

In some aspects, the techniques described herein relate to a propulsor assembly, wherein a central span of the blade, extending from a tip end portion of the first blade portion to a tip end portion of the second blade portion, is substantially orthogonal to the second axis.

In some aspects, the techniques described herein relate to a propulsor assembly, wherein the second axis is substantially orthogonal to the first axis.

In some aspects, the techniques described herein relate to a propulsor assembly, wherein: a leading edge of the first blade portion is arranged in parallel to and offset from a trailing edge of the second blade portion in a chord direction of the blade; a leading edge of the second blade portion is arranged in parallel to and offset from a trailing edge of the first blade portion in the chord direction of the blade; and the hub portion is defined between a root end portion of the first blade portion and a root end portion of the second blade portion.

In some aspects, the techniques described herein relate to a propulsor assembly, wherein the hub portion is oriented at an angle with respect to the leading edge of the first blade portion and the leading edge of the second blade portion, and defines substantially flat portions configured to be coupled to the coupling assembly.

In some aspects, the techniques described herein relate to a propulsor assembly, wherein the propulsor assembly is a lift propulsor assembly included on an electric vertical takeoff and landing aircraft, the lift propulsor assembly generating vertical thrust.

In some aspects, the techniques described herein relate to a propulsor assembly, wherein the propulsor assembly includes four propulsor assemblies configured to be included on an electric aircraft.

In some aspects, the techniques described herein relate to a propulsor assembly, wherein the propulsor assembly includes four propulsor assemblies included on an electric aircraft operable in a vertical flight mode and a forward flight mode, each of the four propulsor assemblies generating vertical thrust.

In some aspects, the techniques described herein relate to a propulsor assembly, wherein a vertical orientation of the propulsor assemblies remains fixed such that the propulsor assemblies do not tilt forward.

In some aspects, the techniques described herein relate to an electric aircraft, including: a main body; and a plurality of lift propulsors coupled to the main body, each of the plurality of lift propulsors including: a unitary blade coupled to and driven by an electric motor such that the unitary blade rotates about a first axis in response to a driving force generated by the electric motor; and a flapping mechanism coupled between the unitary blade and the electric motor, the flapping mechanism including a plurality of torsional bearings coupled to a hub portion of the unitary blade such that the unitary blade flaps about a second axis that is different from the first axis.

In some aspects, the techniques described herein relate to an electric aircraft, wherein the electric aircraft is configured to transition between a vertical thrust-borne phase of flight and a wing-borne phase of flight.

In some aspects, the techniques described herein relate to an electric aircraft, wherein the plurality of lift propulsors includes four lift propulsors, respectively positioned at four quadrants of the main body of the electric aircraft.

Clause 1. A motor and inverter assembly, comprising: a motor, including: a rotor; a stator concentrically arranged with the rotor; a shaft coupled to a central portion of the rotor and configured to transmit a rotational force to a propulsor coupled to the shaft, to drive the propulsor; a first housing coupled to a first end portion of a frame of the stator; and a second housing coupled to a second end portion of the frame of the stator, such that the rotor and the stator are positioned between the first housing and the second housing; and an inverter assembly coupled to the motor, the inverter assembly comprising: a plurality of inverters; and a plurality of support members coupled between the plurality of inverters and the second housing, to couple the plurality of inverters to the motor.

Clause 2. The motor and inverter assembly of clause 1, wherein the first housing includes: a central opening guiding the shaft therethrough; a bearing receptacle defined at the central opening, the bearing receptacle housing a first bearing; a flanged portion formed along a peripheral portion of the first housing; and a plurality of mounting points formed in the flanged portion, wherein the plurality of mounting points are configured to receive a fastener for coupling the motor and inverter assembly to a structural component of an aircraft.

Clause 3. The motor and inverter assembly of clause 2, wherein the first bearing is a tapered roller bearing configured to support a load generated in response to rotation of the propulsor, the first bearing including: a first roller bearing received in the bearing receptacle of the first housing, the first roller bearing having a first bearing capacity configured to react to a moment force imparted on the shaft in response to rotation of the propulsor; and a second roller bearing received in the bearing receptacle of the first housing, the second roller bearing having a second bearing capacity configured to react to a thrust load imparted on the shaft in response to rotation of the propulsor.

Clause 4. The motor and inverter assembly of clause 1, further comprising: a first fan coupled to the rotor, positioned between the rotor and the first housing, and configured to rotate with the rotor to draw cooling air from the first housing radially into the motor; and a second fan coupled to the shaft, positioned between the second housing and the inverter assembly, and configured to rotate with the shaft to draw cooling air axially through the motor.

Clause 5. The motor and inverter assembly of clause 4, wherein the first housing includes a plurality of openings, and wherein external air is drawn into the second housing through the plurality of openings in response to operation of the first fan and the second fan.

Clause 6. The motor and inverter assembly of clause 4, wherein the motor and inverter assembly is configured to be installed within a structure of an aircraft, and wherein air is drawn into the first housing through an air duct on an external surface of the first housing in response to operation of the first fan and the second fan.

Clause 7. The motor and inverter assembly of clause 4, wherein the first fan is a radial fan, comprising: a base; a first plurality of vanes disposed on a first side of the base; and a second plurality of vanes disposed on a second side of the base opposite the first side of the base; wherein the first plurality of vanes directs air across at least one of a stator and an air gap between the stator and the rotor, and the second plurality of vanes directs air through a volume that is radially inward of a plurality of magnets mounted on the rotor.

Clause 8. The motor and inverter assembly of clause 4, wherein the first fan is a radial fan, comprising: a base; a first plurality of radially oriented vanes positioned on a first surface of the base; and a second plurality of radially oriented vanes positioned at a second surface of the base.

Clause 9. The motor and inverter assembly of clause 8, wherein an outer peripheral shape of the base corresponds to an outer peripheral shape of the rotor.

Clause 10. The motor and inverter assembly of clause 4, further comprising a shroud positioned between the second fan and the plurality of inverters, and coupled to the plurality of support members, the shroud including: a ring portion configured to receive cooling air from the second fan; and a plurality of ducts extending axially from the ring portion, at positions corresponding to the plurality of inverters, and configured to guide cooling air from the ring portion to the plurality of inverters.

Clause 11. The motor and inverter assembly of clause 10, wherein each of the plurality of inverters includes: a housing; at least one heat generating component coupled to an interior surface of a side wall of the housing; and a plurality of cooling pins extending outward from an exterior surface of the side wall of the housing, opposite the at least one heat generating component, wherein the plurality of cooling pins are integrally formed with the side wall of the housing so as to absorb heat generated by the at least one heat generating component, and wherein a duct of the plurality of ducts of the shroud is positioned so as to direct cooling air across the plurality of cooling pins.

Clause 12. The motor and inverter assembly of clause 4, wherein the plurality of support members includes: a plurality of lateral support members, with a lateral support member of the plurality of support members positioned between adjacent inverters of the plurality of inverters; and a lower support member including a plurality of cross members extending across a lower end portion of the inverter assembly, with end portions of the plurality of cross members coupled to lower end portions of adjacent inverters of the plurality of inverters.

Clause 13. The motor and inverter assembly of clause 12, wherein each lateral support member of the plurality of lateral support members includes: a body portion, a shape of the body portion corresponding to a space formed between the adjacent inverters; at least one tab formed at an upper portion of the body portion, providing for coupling of the lateral support member to the second housing; a first flange formed on a first lateral side of the body portion, providing for coupling of the lateral support member to a first inverter of the adjacent inverters; and a second flange formed on a second lateral side of the body portion, providing for coupling of the lateral support member to a second inverter of the adjacent inverters.

Clause 14. The motor and inverter assembly of clause 1, further comprising: a sealed bearing received in one of the first housing or the second housing and supporting the shaft; and a temperature sensor coupled in the one of the first housing or the second housing and configured to detect a grease temperature proximate an outer race of the sealed bearing, wherein the grease temperature is indicative of a condition of the sealed bearing.

Clause 15. The motor and inverter assembly of clause 1, wherein the shaft is a hollow shaft configured to receive components of a pitch control mechanism therethrough, coupling an actuation device at a first end portion of the shaft to the propulsor coupled to a second end portion of the shaft.

Clause 16. A motor and inverter assembly, comprising: a motor, including a rotor and a stator concentrically arranged with the rotor; a shaft coupled to a central portion of the rotor; a radial fan coupled to the rotor, at a first end portion of the motor, and configured to rotate with the rotor to draw cooling air radially into the motor; an axial fan coupled to the shaft, at a second end portion of the motor, and configured to rotate with the shaft to draw cooling air axially through the motor; an inverter assembly coupled to the motor, the inverter assembly including a plurality of inverters mounted on an inverter frame and coupled to the motor, the plurality of inverters being configured to provide power to the stator; and a shroud positioned between the axial fan and the inverter assembly, and configured to direct cooling air from the axial fan across the plurality of inverters.

Clause 17. The motor and inverter assembly of clause 16, wherein the radial fan includes: a base having an annular form; a first plurality of vanes positioned on a first surface of the base; and a second plurality of vanes positioned at a second surface of the base, wherein, in response to rotation of the radial fan, cooling air is drawn radially into the motor, and, in response to rotation of the axial fan: a portion of the cooling air drawn in by the radial fan flows between adjacent vanes of the first plurality of vanes and across stator windings of the stator, a portion of the cooling air is guided by the second plurality of vanes and through an air gap between the rotor and the stator, and a portion of the cooling air is drawn into cavities formed between adjacent vanes of the second plurality of vanes, and axially through the motor.

Clause 18. The motor and inverter assembly of clause 17, wherein the shroud includes: a ring portion configured to receive cooling air from the axial fan; and a plurality of ducts extending axially from the ring portion, at positions corresponding to the plurality of inverters, wherein, in response to rotation of the axial fan, the cooling air is drawn from the ring portion, accelerated through the plurality of ducts, and directed across the plurality of inverters.

Clause 19. The motor and inverter assembly of clause 18, wherein each of the plurality of inverters includes: a housing; and a plurality of cooling pins extending outward from an exterior surface of a side wall of the housing, opposite a at least one heat generating component on an interior surface of the side wall, the plurality of cooling pins absorbing heat generated by the at least one heat generating component, wherein the cooling air is directed from the plurality of ducts and across the plurality of cooling pins to cool the plurality of inverters.

Clause 20. The motor and inverter assembly of clause 18, wherein the inverter frame includes a plurality of support members coupling the plurality of inverters to the motor, and positioning the plurality of inverters corresponding to the plurality of ducts of the shroud.

Clause 21. The motor and inverter assembly of clause 16, wherein the inverter frame includes: a plurality of lateral support members, with a lateral support member of the plurality of lateral support members coupled between adjacent inverters of the plurality of inverters so as to extend across a space between the adjacent inverters and enclose a space defined by the plurality of inverters and the plurality of lateral support members; and a lower support member including a plurality of cross members extending across a lower end portion of the inverter assembly, with end portions of the plurality of cross members coupled to lower end portions of adjacent inverters of the plurality of inverters.

Clause 22. The motor and inverter assembly of clause 21, wherein each of the plurality of lateral support members includes: a body portion, a contour of the body portion corresponding to the space between the adjacent inverters; at least one tab formed at an end portion of the body portion, providing for coupling of the lateral support member to a housing of the motor; a first flange formed on a first lateral side of the body portion, providing for coupling of the lateral support member to a first inverter of the adjacent inverters; and a second flange formed on a second lateral side of the body portion, providing for coupling of the lateral support member to a second inverter of the adjacent inverters.

Clause 23. The motor and inverter assembly of clause 16, further comprising: a first housing coupled to a first end portion of a frame of the stator; a second housing coupled to a second end portion of the frame of the stator, such that the rotor and the stator are positioned between the first housing and the second housing; a first bearing received in a bearing receptacle at a central portion of the first housing, supporting a first end portion of the shaft extending through the central portion of the first housing; and a second bearing received in a bearing receptacle at a central portion of the second housing, supporting a second end portion of the shaft extending through the central portion of the second housing.

Clause 24. The motor and inverter assembly of clause 23, wherein: the first housing has a tapered conical shape extending from a central opening through which the first end portion of the shaft extends, to a flanged portion formed along an outer peripheral portion of the first housing, with a plurality of mounting points formed in the flanged portion being configured to receive a fastener for retaining an axial position of the motor and inverter assembly relative to a structural component of an aircraft; and the second housing and the second bearing are configured to retain a radial position of the motor and inverter assembly relative to the structural component of the aircraft.

Clause 25. The motor and inverter assembly of clause 23, wherein at least one of the first bearing or the second bearing is a sealed bearing, the motor and inverter assembly further comprising: a temperature sensor coupled in the respective first housing or second housing and configured to detect a grease temperature proximate an outer race of the sealed bearing, wherein the grease temperature is indicative of a condition of the sealed bearing.

Clause 26. A motor and inverter assembly, comprising: a motor, comprising: a rotor; and a stator concentrically arranged with the rotor; a radial fan coupled to the rotor, the radial fan comprising: a base having an annular form; a first plurality of vanes on a first side of the base; and a second plurality of vanes on a second side of the base, opposite the first side; and an inverter assembly coupled to the motor, including at least one inverter providing power to the stator, wherein, in response to rotation of the radial fan: cooling air is drawn radially into the motor by the first plurality of vanes and the second plurality of vanes; a first portion of cooling air flows in a radial direction along the first side of the base, through adjacent vanes of the first plurality of vanes, and is guided in an axial direction by a stationary shroud coupled radially outward from the radial fan; and a second portion of the cooling air flows in the radial direction along the second side of the base, and is guided in the axial direction by a contour of the second side of the base defining a rotating shroud.

Clause 27. The motor and inverter assembly of clause 26, further comprising: a shaft coupled to a central portion of the rotor and configured to transmit a rotational force to a propulsor coupled to the shaft, to drive the propulsor; a first housing coupled to a first end portion of a frame of the stator; a second housing coupled to a second end portion of the frame of the stator, such that the rotor and the stator are positioned between the first housing and the second housing; a second fan coupled to the shaft, positioned between the second housing and the inverter assembly, and configured to rotate with the shaft to draw cooling air axially through the motor; and a shroud positioned between the second fan and the inverter assembly and configured to guide cooling air to the at least one inverter.

Clause 28. The motor and inverter assembly of clause 27, wherein the inverter assembly includes: a plurality of inverters; a plurality of support members, with a support member of the plurality of support members positioned between each pair of adjacent inverters of the plurality of inverters; and a plurality of cross members extending across a lower end portion of the inverter assembly, with end portions of the plurality of cross members coupled to lower end portions of adjacent inverters of the plurality of inverters, and wherein the shroud includes: a ring portion configured to receive cooling air from the second fan; and a plurality of ducts extending axially from the ring portion, at positions corresponding to the plurality of inverters of the inverter assembly, wherein the plurality of ducts are configured to accelerate and guide cooling air from the ring portion to the plurality of inverters.

Clause 29. The motor and inverter assembly of clause 27, wherein the first housing includes: a central opening through which an end portion of the shaft extends; a flanged portion defining an outer peripheral portion of the first housing; a tapered conical portion extending from the central opening to the flanged portion; a plurality of openings formed in the tapered conical portion configured to guide external air into the motor through the first housing; and a plurality of mounting points formed in the flanged portion and configured to receive a fastener for retaining an axial position of the motor and inverter assembly relative to a structural component of an aircraft in which the motor and inverter assembly is installed.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," "bottom," "lower," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

## Claims

1. A motor and inverter assembly (290; 790; 890), comprising:
a motor (200), including:
a rotor (240);
a stator (250) concentrically arranged with the rotor (240);
a shaft (248) coupled to a central portion of the rotor (240) and configured to transmit a rotational force to a propulsor (115) coupled to the shaft (248), to drive the propulsor (115);
a first housing (210) coupled to a first end portion of a frame (254) of the stator (250); and
a second housing (220) coupled to a second end portion of the frame (254) of the stator (250), such that the rotor (240) and the stator (250) are positioned between the first housing (210) and the second housing (220); and
an inverter assembly coupled to the motor (200), the inverter assembly comprising:
a plurality of inverters (280); and
a plurality of support members (285; 780; 880) coupled between the plurality of inverters (280) and the second housing (220), to couple the plurality of inverters (280) to the motor (200).

2. The motor and inverter assembly (290; 790; 890) of claim 1, wherein the first housing (210) includes:
a central opening guiding the shaft (248) therethrough;
a bearing receptacle (211) defined at the central opening, the bearing receptacle (211) housing a bearing (212);
a flanged portion (215) formed along a peripheral portion of the first housing (210); and
a plurality of mounting points (216) formed in the flanged portion (215), wherein the plurality of mounting points (216) are configured to receive a fastener for coupling the motor and inverter assembly (290; 790; 890) to a structural component of an aircraft (100).

3. The motor and inverter assembly (290; 790; 890) of claim 2, wherein the bearing (212) is a tapered roller bearing configured to support a load generated in response to rotation of the propulsor (115), the bearing (212) including:
a first roller bearing (212A) received in the bearing receptacle (211) of the first housing (210), the first roller bearing (212A) having a first bearing capacity configured to react to a moment force imparted on the shaft (248) in response to rotation of the propulsor (115); and
a second roller bearing (212B) received in the bearing receptacle (211) of the first housing (210), the second roller bearing (212B) having a second bearing capacity configured to react to a thrust load imparted on the shaft (248) in response to rotation of the propulsor (115).

4. The motor and inverter assembly (290; 790; 890) of any one preceding claim, further comprising:
a first fan (230) coupled to the rotor (240), positioned between the rotor (240) and the first housing (210), and configured to rotate with the rotor (240) to draw cooling air from the first housing (210) radially into the motor (200); and
a second fan (260) coupled to the shaft (248), positioned between the second housing (220) and the inverter assembly, and configured to rotate with the shaft (248) to draw cooling air axially through the motor (200).

5. The motor and inverter assembly (290; 790; 890) of claim 4, wherein the first housing (210) includes a plurality of openings (214), and wherein external air is drawn into the second housing (220) through the plurality of openings (214) in response to operation of the first fan (230) and the second fan (260).

6. The motor and inverter assembly (290; 790; 890) of any one of claims 4 to 5, wherein the motor (200) and inverter assembly (290; 790; 890) is configured to be installed within a structure of an aircraft (100), and wherein air is drawn into the first housing (210) through an air duct on an external surface of the first housing (210) in response to operation of the first fan (230) and the second fan (260).

7. The motor and inverter assembly (290; 790; 890) of any one of claims 4 to 6, wherein the first fan (230) is a radial fan, comprising:
a base (234);
a first plurality of vanes (232) disposed on a first side of the base (234); and
a second plurality of vanes (239) disposed on a second side of the base (234) opposite the first side of the base (234);
wherein the first plurality of vanes (232) directs air across at least one of the stator (250) and an air gap between the stator (250) and the rotor (240), and
the second plurality of vanes (239) directs air through a volume that is radially inward of a plurality of magnets (246) mounted on the rotor (240).

8. The motor and inverter assembly (290; 790; 890) of any one of claims 4 to 6, wherein the first fan (230) is a radial fan, comprising:
a base (234);
a first plurality of radially oriented vanes (232) positioned on a first surface of the base (234); and
a second plurality of radially oriented vanes (239) positioned at a second surface of the base (234).

9. The motor and inverter assembly (290; 790; 890) of any one of claims 7 to 8, wherein an outer peripheral shape of the base (234) corresponds to an outer peripheral shape of the rotor (240).

10. The motor and inverter assembly (290; 790; 890) of any one of claims 4 to 9, further comprising a shroud (270) positioned between the second fan (260) and the plurality of inverters (280), and coupled to the plurality of support members (285; 780; 880), the shroud (270) including:
a ring portion (272) configured to receive cooling air from the second fan (260); and
a plurality of ducts (274) extending axially from the ring portion (272), at positions corresponding to the plurality of inverters (280), and configured to guide cooling air from the ring portion (272) to the plurality of inverters (280).

11. The motor and inverter assembly (290; 790; 890) of claim 10, wherein each of the plurality of inverters (280) includes:
a housing (284);
at least one heat generating component (289) coupled to an interior surface of a side wall of the housing (284); and
a plurality of cooling pins (282) extending outward from an exterior surface of the side wall of the housing (284), opposite the at least one heat generating component (289),
wherein the plurality of cooling pins (282) are integrally formed with the side wall of the housing (284) so as to absorb heat generated by the at least one heat generating component (289), and
wherein a duct of the plurality of ducts (274) of the shroud (270) is positioned so as to direct cooling air across the plurality of cooling pins (282).

12. The motor and inverter assembly (290; 790; 890) of any one preceding claim, wherein the plurality of support members (285; 780; 880) includes:
a plurality of lateral support members, with each lateral support member of the plurality of lateral support members positioned between adjacent inverters of the plurality of inverters (280); and
a lower support member (275) including a plurality of cross members (271) extending across a lower end portion of the inverter assembly, with end portions (277) of the plurality of cross members (271) coupled to lower end portions of adjacent inverters of the plurality of inverters (280).

13. The motor and inverter assembly (290; 790; 890) of claim 12, wherein each lateral support member of the plurality of lateral support members includes:
a body portion (281), a shape of the body portion (281) corresponding to a space formed between the adjacent inverters;
at least one tab (283) formed at an upper portion of the body portion (281), providing for coupling of the lateral support member to the second housing (220);
a first flange (287) formed on a first lateral side of the body portion (281), providing for coupling of the lateral support member to a first inverter of the adjacent inverters; and
a second flange (287) formed on a second lateral side of the body portion (281), providing for coupling of the lateral support member to a second inverter of the adjacent inverters.

14. The motor and inverter assembly (290; 790; 890) of any one preceding claim, further comprising:
a sealed bearing (610) received in one of the first housing (210) or the second housing (220) and supporting the shaft (248); and
a temperature sensor (650) coupled in the one of the first housing (210) or the second housing (220) and configured to detect a grease temperature proximate an outer race (612) of the sealed bearing (610),
wherein the grease temperature is indicative of a condition of the sealed bearing (610).

15. The motor and inverter assembly (290; 790; 890) of any one preceding claim, wherein the shaft (248) is a hollow shaft configured to receive components of a pitch control mechanism (860) therethrough, coupling an actuation device at a first end portion of the shaft (248) to the propulsor (115) coupled to a second end portion of the shaft (248).
